# FASCICULE DE BREVET EUROPEEN

(11) **EP 2 093 718 B1**
(45) Date de publication et mention de la délivrance du brevet: **31.10.2018**
(21) Numéro de dépôt: 09290123.0
(22) Date de dépôt: 19.02.2009
(51) Int. Cl.: G07F 7/00, G07F 17/10, G07B 15/00, B62H 5/00

(54) **Système et procédé de gestion de stationnement**
System und Verfahren zur Einparksteuerung
Parking management system and method

(30) Priorité: 19.02.2008 FR 0800895
(43) Date de publication de la demande: 26.08.2009
(73) Titulaire: Tracetel, 78320 La Verriere (FR)
(72) Inventeur: Benamara, Raouf, 78610 le Perray en Yvelines (FR); Emery, Jean, 78470 Saint Remy les Chevreuses (FR)
(74) Mandataire: Debay, Yves

(56) Documents cités:
- EP-A- 0 875 867
- EP-A- 1 092 615
- EP-A- 1 820 721
- EP-A- 1 926 060
- DE-U1- 20 210 786
- FR-A- 2 824 942
- US-A- 4 920 334
- US-A- 5 278 538
- US-B1- 6 384 717

## Description

L'invention concerne le domaine de la gestion d'emplacements de stationnement pour des objets tels que, par exemple, des cycles ou des skis. L'invention concerne notamment une gestion de l'accrochage d'objets destinés à des utilisateurs abonnés à un service de location ou de stationnement de ces objets.

Ces systèmes permettent la gestion d'une flotte de bicyclettes en libre service. Cependant, ils sont généralement complexes à mettre en oeuvre et nécessitent des équipements coûteux. De plus les services de location de bicyclettes existants sont généralement limités à un type de vélo déterminé comprenant un équipement particulièrement adapté à une borne d'accrochage.

Le document EP 1 092 615 enseigne un dispositif de surveillance d'objets parqués intégrant des moyens antivols. Ce dispositif permet de gérer des objets destinés à la location ou au prêt.

Le document EP 0 875 867 enseigne un système automatisé de stockage de cycles. Ce système s'applique aux cycles destinées à être mis à la disposition d'utilisateurs pour un usage temporaire et a pour but de restreindre le personnel nécessaire à son fonctionnement et sa gestion tout en réduisant les risques de fraude, de vol et de vandalisme.

Le document FR 2 824 942 enseigne un système de gestion d'une flotte de bicyclettes comprenant une pluralité de bicyclettes munies chacune d'un moyen d'identification pour recevoir un identifiant et une zone d'accrochage.

Le document US 6,384,717 enseigne un système de sécurisation et de location de bicyclettes. Ce système a pour but de fournir un système amélioré facilitant la location de bicyclettes ou d'autres articles dans lequel la location d'articles peut être individuellement reconnue par un système automatisé. Les articles à louer sont protégés du vol en étant cependant louables sans que la présence d'un intendant ne soit requise.

Tous les documents cités enseignent des dispositifs ou des systèmes qui manquent de flexibilités au moins par le fait qu'ils ne donnent pas la possibilité à un utilisateur de louer un emplacement pour un objet privé.

Il existe donc un besoin de rendre plus flexibles les systèmes et procédés de gestion de stationnement, par exemple pour des cycles. De plus il importe de trouver des systèmes de gestion de stationnement de construction peu onéreuse et d'installation beaucoup plus flexible.

La présente invention a pour objet de pallier un ou plusieurs inconvénients de l'art antérieur, en proposant un système de gestion de stationnement d'objets destinés à des utilisateurs, permettant d'étendre la gamme de services proposés tels que des services de location de ces objets ou des services de stationnement automatique de ces objets.

Cet objectif est atteint grâce à un système de stockage et de déstockage d'objets pour la location d'emplacements ou pour la location d'objets tel que revendiqué dans la revendication 1.

Selon une autre particularité, un identifiant d'utilisateur et un identifiant d'un organe de verrouillage d'un emplacement à louer, lus par le lecteur, déclenchent chacun un programme de traitement différent exécuté par le système de traitement.

Selon une autre particularité, le lecteur est du type lecteur d'étiquettes radiofréquence, les étiquettes liées à un objet à louer ou à un organe de verrouillage d'un emplacement à louer des étiquettes radiofréquences passives, l'objet portatif comprenant le code d'identifiant de l'utilisateur ou des droits de l'utilisateur, comprenant une étiquette radiofréquence passive ou comprenant un composant actif d'émulation d'étiquette radiofréquence.

Selon une autre particularité, le système de traitement est agencé de façon à déclencher le démarrage d'une temporisation de durée déterminée lors de la détection du verrouillage du premier dispositif de stockage et de la lecture d'une étiquette du premier type,
le système de traitement réalisant l'arrêt de la temporisation avant une fin de temporisation, en cas de lecture d'une identification d'utilisateur validé par un module de vérification d'autorisation de verrouillage, la fin de la temporisation déclenchant la commande de déverrouillage du dispositif de stockage, par le système de traitement.

Selon une autre particularité, le système comprend un dispositif de surveillance vidéo des emplacements en communication avec le système de traitement.

Selon une autre particularité, le système comprend une enceinte disposée autour des dispositifs de stockage formant un parc comprenant un portillon d'accès dont l'ouverture est commandée par la lecture d'un identifiant d'utilisateur.

Selon une autre particularité, le dispositif de stockage comprend un boîtier équipé d'une fente d'insertion et de guidage de l'organe d'accrochage comprenant un évidement de contour fermé, la fente étant disposée en face d'un crochet monté en rotation par rapport au boîtier, le crochet étant agencé de façon à se positionner en position verrouillée lors de l'insertion de l'organe d'accrochage, un premier ressort entraînant le crochet vers une position déverrouillée dans laquelle une partie saillante du crochet s'insère dans l'évidement de l'organe d'accrochage, un organe de blocage du crochet en position verrouillée étant entraîné par un second ressort vers le crochet, l'organe de blocage étant éloigné du crochet par au moins une broche décrivant une trajectoire circulaire, la broche s'insérant dans un évidement de contour ouvert de l'organe de blocage pour entraîner l'organe de blocage, la broche étant entraînée par un moteur piloté par le système de traitement.

Selon une autre particularité, l'objet à louer est un cycle, le dispositif de stockage comprenant un dispositif de maintien d'une roue de cycle, comprenant deux plaques parallèles entre elles et liées à un poteau ou à un mur supportant le dispositif de stockage.

Selon une autre particularité, le dispositif d'accrochage lié à un cycle par un lien tel qu'une chaîne annelée, est fixé à un boîtier mobile avec le dispositif d'accrochage, le boîtier comprenant une serrure actionnée par une clé pour le verrouillage dans un logement de réception d'un embout d'immobilisation du cycle hors des dispositifs de stockage, la serrure étant agencée pour ne permettre une extraction de la clé que lorsque l'embout d'antivol est verrouillé dans son logement, l'embout d'antivol étant fixé au cycle ou à un point fixe appartenant à un mur ou à du mobilier urbain.

Selon une autre particularité, le système comprend un serveur de gestion d'une base de données réalisant la mémorisation d'identifiants d'utilisateurs associés chacun à un identifiant de l'emplacement de l'objet stocké, lors de locations d'emplacement de stationnement,
ou réalisant la mémorisation d'identifiants d'utilisateurs associés chacun à un identifiant de l'objet loué, le serveur de gestion étant en communication avec le système de traitement par une liaison de communication.

Selon une autre particularité, l'identifiant de l'emplacement de l'objet stocké correspond à un identifiant d'organe de verrouillage ou une référence ou une adresse du dispositif de stockage.

Selon une autre particularité, la liaison de communication avec le serveur de gestion de la base de données est réalisée via un réseau de communication par ondes radiofréquences.

Selon une autre particularité, les dispositifs de stockage sont reliés, par un réseau câblé d'alimentation et de communication, à un dispositif de gestion comprenant le système de traitement, le dispositif de gestion étant relié à un réseau de distribution d'électricité,
les dispositifs de stockage étant montés sur des poteaux, au moins un tube de section triangulaire ou rectangulaire, fixé au sol ou affleurant avec le sol, entourant et protégeant le réseau câblé.

Selon une autre particularité, le serveur comprend au moins :
- un module de communication avec les dispositifs de stockage ou avec le dispositif de gestion d'une pluralité de dispositifs de stockage, ou
- un module de gestion d'abonnements souscrits par des utilisateurs, ou
- un module de facturation de services aux utilisateurs, ou
- un module de supervision du serveur de gestion et des bases de données, ou
- un module de gestion de maintenance assistée par ordinateur, ou
- une plateforme monétique réalisant des opérations sécurisées bancaires, ou
- un serveur In ternet de gestion d'un site Internet.

Selon une autre particularité, le dispositif de gestion comprend:
- un module de gestion d'interface homme machine comprenant au moins un composant de saisie d'un code d'identification de l'utilisateur pour la mise à jour des données mémorisées d'identification, un composant d'affichage et un lecteur d'objets portables électroniques comprenant chacun des données d'identification de l'utilisateur pour la mise à jour des données mémorisées d'identification, ou
- un module de gestion des communications avec le serveur de gestion par ondes hertziennes ou par réseau câblé ou
- un module monétique de gestion de paiements par les utilisateurs, ou
- le module de vérification d'identification pour une authentification des données mémorisées d'identification de l'utilisateur ou du cycle, ou
- le module de commande pour des contrôles et des commandes des dispositifs de stockage reliés par un réseau local, au dispositif de gestion.

Selon une autre particularité, le système de traitement est agencé de façon à commander les dispositifs de stockage pour autoriser l'accrochage uniquement des objets publics disponibles à la location ou pour autoriser l'accrochage uniquement des objets privés à stocker ou pour autoriser l'accrochage des objets publics ou privés indifféremment, un déverrouillage étant commandé suite à la détection d'un verrouillage associé à la détection d'un type d'objet non autorisé.

Selon une autre particularité, le serveur gère une pluralité de bases de données parmi :
- une base de données de clientèle comprenant au moins des données d'identification d'utilisateurs,
- une base de données de gestion de parcs de stationnement comprenant au moins des données représentatives d'un nombre de dispositifs de stockage fonctionnels et d'un nombre de dispositifs de stockage occupés par des cycles pour chaque parc,
- une base de données de maintenance comprenant au moins des données représentatives d'opérations de maintenance à réaliser,
- une base de données d'archivage comprenant au moins des données représentatives d'opérations précédemment réalisées concernant des verrouillages ou déverrouillage de dispositifs de stockage.

Un autre objet de la présente invention est de proposer un procédé de gestion de stationnement d'objets destinés à des utilisateurs, permettant d'étendre la gamme de services proposés tels que des services de location de ces objets ou des services de stationnement automatique de ces objets.

Cet objectif est atteint grâce à un procédé de stockage et de déstockage d'objets pour la location d'emplacements ou pour la location d'objets stockés, tel que revendiqué dans la revendication 19.

Selon une autre particularité, la lecture des données représentatives du code d'identifiant d'un utilisateur et la lecture des données représentatives du code d'identifiant de l'étiquette liée à l'organe de verrouillage de l'emplacement à louer déclenche des opérations de traitement différentes.

Selon une autre particularité, une pluralité de dispositifs de stockage étant commandée par le système de traitement, chaque dispositif de stockage pouvant bloquer un objet à stocker, chaque dispositif de stockage comprenant un capteur de verrouillage contrôlé par le système de traitement commandant le verrouillage ou le déverrouillage des dispositifs de stockage, le procédé comprend une étape de verrouillage du premier des dispositifs de stockage par l'utilisateur, provoquant la détection du verrouillage du premier dispositif de stockage.

Selon une autre particularité, le procédé est suivi de :
- une étape de détection d'une étiquette radiofréquence correspondant à un identifiant d'un objet disponible à la location,
- une étape de mise à jour d'un espace mémoire, accédé par le système de traitement, de mémorisation de couples formés d'un identifiant de l'utilisateur et d'un identifiant de l'objet stocké où le couple correspondant à l'identifiant d'objet lu est supprimé.

Selon une autre particularité, le procédé est suivi de :
- une étape de détection d'une étiquette radiofréquence correspondant à un identifiant d'emplacement disponible à la location,
- une étape de lecture d'une étiquette radiofréquence correspondant à un identifiant de l'utilisateur,
- une étape de validation vérification l'état valide ou non de l'identifiant de l'utilisateur,
- une étape de mémorisation du couple formé par l'identifiant d'utilisateur valide et l'identifiant d'emplacement dans l'espace mémoire.

Selon une autre particularité, en cas d'échec de lecture de l'identifiant d'utilisateur ou en cas d'échec de validation de l'identifiant d'utilisateur invalide, le dispositif de stockage est alors commandé déverrouillé.

Selon une autre particularité, l'étape de détection de l'étiquette radiofréquence correspondant à l'identifiant d'emplacement disponible à la location, est suivie d'une étape de démarrage d'une temporisation de durée déterminée,
la temporisation étant arrêtée avant une fin de temporisation en cas d'identifiant d'utilisateur validé correspondant au maintien du verrouillage ou
la fin de la temporisation correspondant à l'invalidation de validation l'identifiant d'utilisateur et étant suivie du déverrouillage.

Selon une autre particularité, le dispositif de stockage comprenant une gâche de verrouillage d'un organe d'accrochage, le système de traitement commandant la gâche au moins en position verrouillée et la gâche étant agencée de façon à se positionner en position de verrouillage lors de l'insertion de l'organe d'accrochage dans la gâche, l'étiquette radiofréquence étant noyée dans l'organe d'accrochage ou dans l'objet à stocker, le lecteur d'étiquettes radiofréquences étant disposé en face de l'étiquette radiofréquence noyée, dans une position bloquée de l'objet à stocker.

Selon une autre particularité, le système de traitement communiquant avec un serveur de gestion d'une base de données,
l'étape de vérification de l'état de l'identifiant de l'utilisateur comprend:
- une étape de transmission, au serveur de gestion de la base de données, d'au moins l'identifiant de l'utilisateur associé à l'identifiant d'emplacement correspondant à l'identifiant lu de l'organe d'accrochage bloqué dans le dispositif de stockage en position verrouillée ou à une référence ou une adresse du dispositif de stockage mémorisée par le système de traitement,
- une étape d'attente de la réponse du serveur de gestion de la base de données, le serveur réalisant une recherche, dans la base de données, de données associées à l'identifiant d'utilisateur et représentatives d'une autorisation de verrouillage,
- une étape de réception de données transmises par le serveur de gestion, représentatives de l'autorisation validée de verrouillage correspondant à l'état valide de l'identifiant d'utilisateur.

Selon une autre particularité, le procédé est précédé, lors d'une location de l'objet à stocker, de :
- une étape de réservation de l'objet à stocker ou de souscription à un abonnement à un service de location d'objets à stocker ou de paiement d'une location de l'objet à stocker, par l'utilisateur, auprès d'une station de paiement, d'abonnement ou de réservation,
- une étape de fourniture, à l'utilisateur d'un identifiant propre à l'utilisateur, après la réservation ou la souscription à l'abonnement ou le paiement validé par la station,
- une étape de demande, par l'utilisateur, d'un déverrouillage du cycle, cette demande étant réalisée auprès du dispositif de stockage ou auprès d'un dispositif de gestion comprenant le système de traitement,
- une étape d'identification de l'utilisateur par le système de traitement comprenant la mémorisation du couple comprenant l'identifiant d'utilisateur associé à l'identifiant de l'objet loué,
- une étape de commande, par le système de traitement, d'un déverrouillage du dispositif de stockage, permettant à l'utilisateur de retirer l'objet stocké.

Selon une autre particularité, le procédé est précédé, lors d'une location d'un emplacement de stationnement, de :
- une étape de réservation d'emplacement de stationnement d'objet à stocker ou de souscription à un abonnement à un service de location d'emplacements de stationnement d'objets à stocker ou de paiement d'une location d'emplacement de stationnement de l'objet à stocker, par l'utilisateur auprès d'une station de paiement, d'abonnement ou de réservation,
- une étape de fourniture, à l'utilisateur, d'un identifiant propre à l'utilisateur, après la réservation ou la souscription à l'abonnement ou le paiement validé par la station,
et le procédé est suivi de :
- une étape de demande, par l'utilisateur, d'un déverrouillage de l'objet stocké, cette demande étant réalisée auprès du dispositif de stockage ou auprès d'un dispositif de gestion comprenant le système de traitement,
- une étape d'identification de l'utilisateur auprès du dispositif de stockage ou auprès du dispositif de gestion, en correspondance avec l'identifiant d'utilisateur précédemment mémorisé,
- une étape de commande, par le système de traitement, du déverrouillage du dispositif de stockage permettant à l'utilisateur de retirer l'objet stocké,
- une étape suppression en mémoire du couple formé par l'identifiant d'utilisateur et l'identifiant d'emplacement loué.

L'invention, ses caractéristiques et ses avantages apparaîtront plus clairement à la lecture de la description faite en référence aux figures données à titre d'exemple non limitatif dans lesquelles :
- la figure 1 représente une vue en perspective d'un exemple de dispositif de stockage d'un cycle, positionné sur un mur, selon l'invention ;

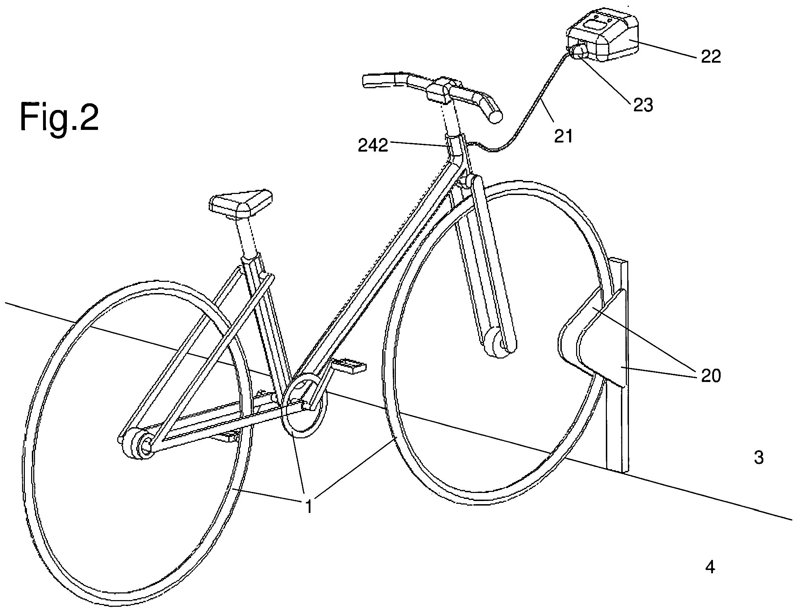

- la figure 2 représente une vue en perspective d'un exemple de dispositif de stockage d'un cycle, positionné sur un mur, selon l'invention ;
- la figure 3 représente une vue en perspective d'un parc de stationnement positionné sur un mur pour l'accrochage de cycles, selon l'invention ;
- la figure 4 représente une vue en perspective d'un exemple de dispositif de stockage de deux cycles, selon l'invention ;
- la figure 5 représente un exemple de diagramme fonctionnel des composants d'un système pour la gestion de dispositifs de stockage, selon l'invention ;
- la figure 6 représente un exemple de diagramme fonctionnel des modules interactifs pour la commande et le contrôle de dispositifs de stockage, selon l'invention ;
- la figure 7 représente un exemple de pupitre de commande dans un parc avec plusieurs dispositifs de stockage selon l'invention ;
- les figures 8 à 12 représentent des exemples de position d'un crochet de verrouillage d'une gâche dans un dispositif de stockage, selon l'invention ;
- la figure 13 est un diagramme représentant un exemple de procédé de location d'un cycle selon l'invention ;
- la figure 14 est un diagramme représentant un exemple de procédé de location d'un emplacement de stationnement d'un cycle selon l'invention ;
- la figure 15 est un diagramme représentant un exemple de procédé de validation d'une identification selon l'invention ;
- les figures 16 et 17 représentent des exemples d'embouts fixés sur un mur pour des immobilisations temporaires de cycles ;
- la figure 18 représente un exemple de boîtier d'immobilisation fixé à un organe d'accrochage.

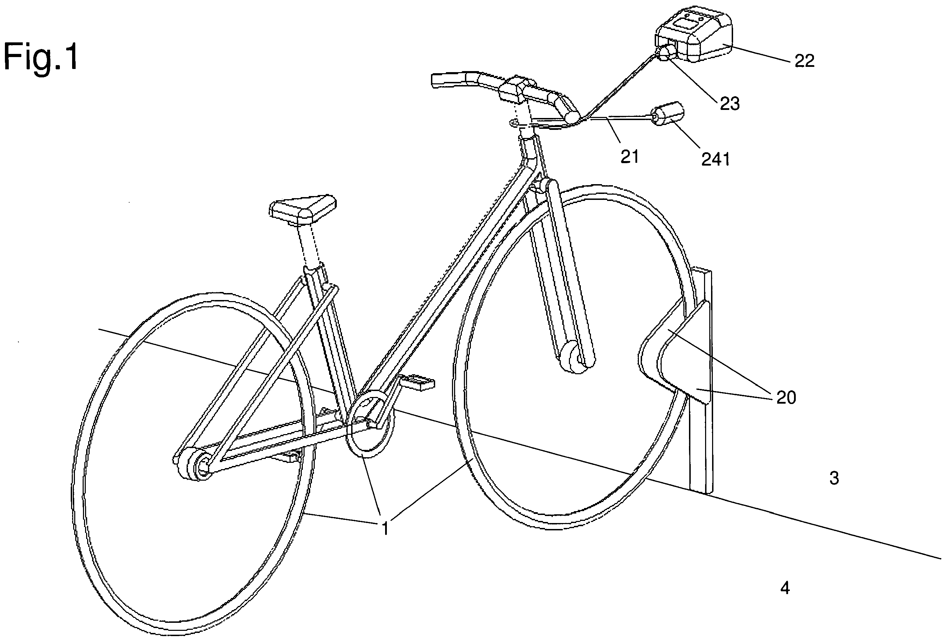

L'invention va à présent être décrite en référence aux figures précédemment citées. Un dispositif de stockage peut par exemple être utilisé pour le stockage de cycles personnels d'utilisateurs louant un emplacement de stationnement ou pour le stockage de cycles en libre service disponibles à la location. Comme représenté à la figure 1, un cycle (1) reposant sur le sol (4) peut, par exemple être appuyé contre un organe (20) de positionnement et être bloqué dans sa position par un câble (21) attaché à un dispositif (22) de stockage. Le câble peut aussi être remplacé par une chaîne, comme par exemple une chaîne annelée. De manière non limitative, le câble comprend à son extrémité un organe (23) d'accrochage maintenu dans une gâche du dispositif (22) de stockage. Le câble est, par exemple fixé à son autre extrémité à une embase (241, 242) fixée, de manière non limitative, au mur (3) ou au cycle (1). Le dispositif de stockage et l'organe (20) de positionnement, fixés au mur (3), utilisés pour le stockage de cycle, sont particulièrement peu encombrants et faciles à installer. Le câble fait ainsi partie de l'organe de verrouillage de l'objet à stocker, mais ce câble pourrait aussi être remplacé par un bras ou un coude rigide, articulé sur le dispositif de stockage et comprenant, à son extrémité, un organe d'accrochage équipé d'une étiquette radiofréquence.

Un dispositif de stockage peut aussi être utilisé pour le stockage de skis. Un logement en « U » permet par exemple de loger une paire de skis. Ce logement est par exemple fermé par un battant ou un bras monté en rotation ayant à son extrémité un organe d'accrochage s'insérant dans une gâche du dispositif de stockage en position verrouillée. La paire de skis posée debout sur le sol est ainsi maintenue dans le dispositif de stockage de façon sécurisée.

Le dispositif de stockage peut par exemple comprendre un composant de commande et un composant de contrôle communicant avec des capteurs internes ou avec un lecteur radiofréquence du dispositif de stockage. Le dispositif de stockage alimenté en énergie électrique peut alors fonctionner de façon autonome ou commandé par un module de commande, pour réaliser un blocage d'un objet déterminé en position verrouillée ou libérer l'objet en position déverrouillée.

Un dispositif (225) de gestion, comme par exemple un concentrateur ou un automate peut par exemple contrôler et commander plusieurs dispositifs de stockage. Le dispositif (22) de stockage, comprenant par exemple une gâche pour l'accrochage de l'organe (23) d'accrochage, communique par exemple avec un ou plusieurs modules (701) de commande ou de contrôle, par exemple, par une liaison par câbles ou par une liaison par ondes radiofréquences. De cette façon le dispositif (22) de stockage peut communiquer des données d'identification de l'objet stocké, comme par exemple un cycle, ou des données relatives à l'utilisateur ou recevoir une commande de maintien en position verrouillée ou de déverrouillage de son actionneur comme par exemple une gâche. Le dispositif (22) de stockage est par exemple alimenté en énergie électrique par le réseau de distribution électrique ou par un faisceau d'alimentation relié au dispositif (225) de gestion.

Une liaison radiofréquence du dispositif (22) de stockage avec un module de commande ou de contrôle, est par exemple, une liaison utilisant un réseau de type Wi-Fi ou Bluetooth ou un réseau cellulaire radiofréquence de type GPRS (General Packet Radio Service) ou UMTS (Universal Mobile Telecommunications System) ou GSM (Global System for Mobile Communications). L'installation du dispositif de stockage et l'échange de données sont ainsi énormément facilités, pour permettre une bonne traçabilité et une centralisation.

Ce type de liaison radiofréquence peut aussi être utilisée entre un dispositif de gestion et un serveur (SER1) central comprenant un programme (80) de gestion de données telles que :
- des d onnées (801) concernant les utilisateurs ou
- des données (802) concernant l'état des parcs de stationnement ou
- des d onnée (803) concernant les opérations de maintenance ou
- des données (804) concernant un historique d'opérations relatives aux cycles.

Le serveur (SER1) central de gestion peut par exemple communiquer avec le dispositif (225) de gestion pour des échanges de données ou de commandes. Plusieurs dispositifs de stockage commandés sont, par exemple reliés au dispositif (225) de gestion par un réseau câblé, par exemple du type RS485.

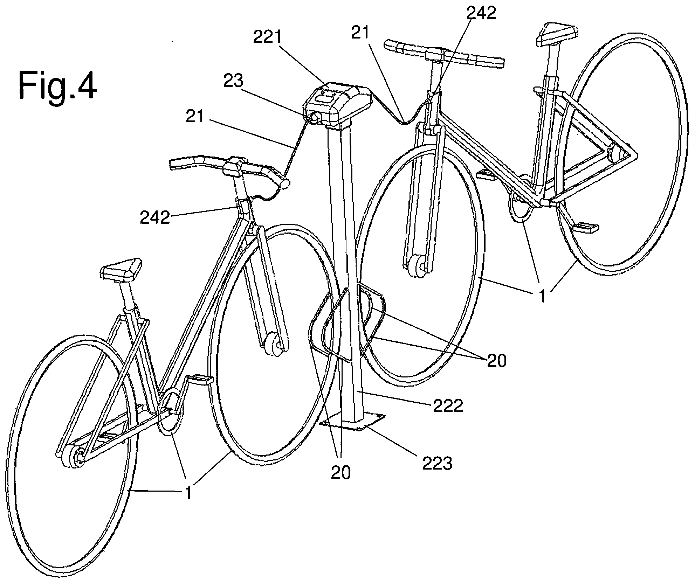

La figure 4 représente un exemple de réalisation d'un double dispositif (221) de stockage pour cycles, disposé en haut d'un poteau (222) fixé au sol par une embase (223) du poteau. De manière non limitative, le double dispositif (221) de stockage comprend deux gâches pour recevoir deux organes (23) d'accrochage. Le boîtier de ce dispositif (221) de stockage est, par exemple, fixé au poteau (222) par des vis à tête sécable. C'est-à-dire que les têtes de vis se sectionnent par le serrage de la vis, au-delà d'un couple déterminé, pour empêcher de dévisser ce dispositif de stockage. De manière non limitative, le poteau (222) est fixé à deux (20) organes de positionnement, situés chacun sous une gâche du double dispositif (221) de stockage.

De manière non limitative, un organe de positionnement réalisant un appui pour l'objet à stocker, sera réalisé pour empêcher l'accrochage d'un câble, l'organe de positionnement ayant, par exemple une forme de U dont les pattes latérales viennent de chaque côté de l'objet à stocker, le bas du U étant contre le sol (4).

Un poteau équipé d'un dispositif de stockage est avantageusement facile à installer. Un faisceau de câbles d'alimentation ou de communication pourra par exemple, être intégré dans un rail collé au sol ou affleurant avec le sol et joignant les poteaux des dispositifs (222) de stockage et le dispositif (225) de gestion de ces dispositifs de stockage.

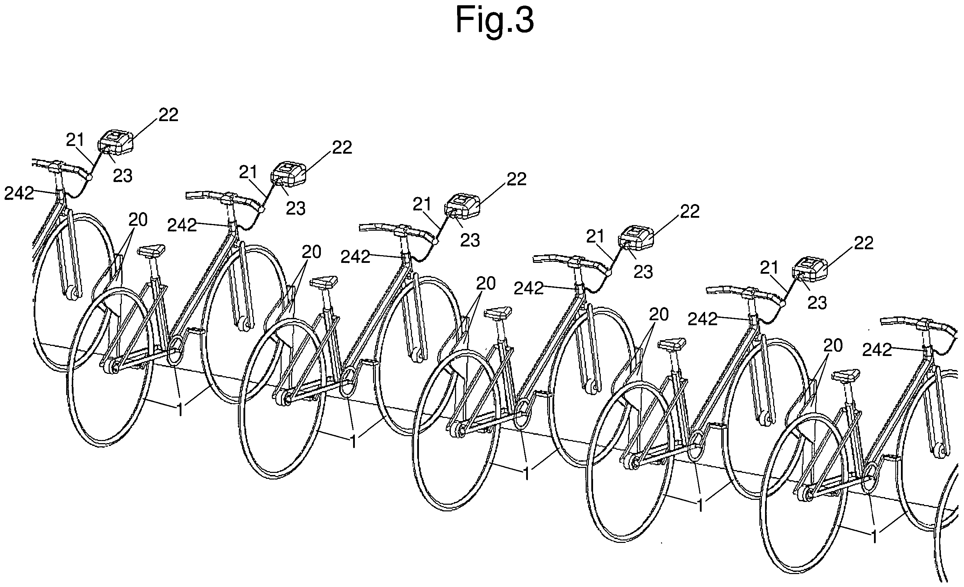

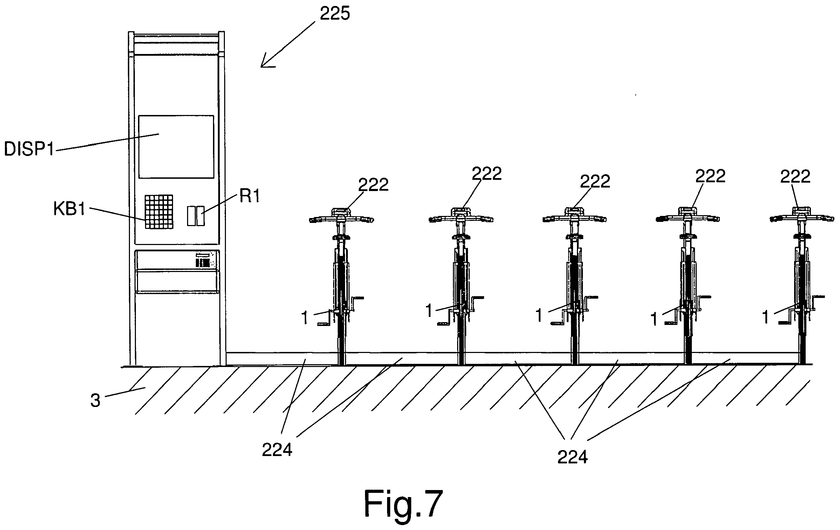

Les figures 3 et 7 représente chacune un exemple de parc de stationnement pour des objets à stocker, comme par exemple des cycles. De manière non limitative, une caméra de surveillance du parc transmet des données représentatives d'images de surveillance à un serveur central de surveillance ou au programme principal (80) du serveur (SER1) central de gestion. Un parc comprenant plusieurs dispositifs de stockage comme représenté à la figure 1, pourra avantageusement s'adapter au stockage de plusieurs types d'objets.

Le module de commande peut par exemple comparer des identifiants d'étiquettes radiofréquences lues avec des formats d'identifiants mémorisés représentatifs d'un premier ou d'un second types d'identifiants. Le verrouillage peut, par exemple, être autorisé pour seulement une étiquette du premier type ou seulement pour une étiquette du second type ou pour les deux types d'étiquettes. Le premier type correspond par exemple à un objet privé à stocker lors d'une location d'emplacement et le second type correspond par exemple à un objet en libre service disponible à la location. Le module de commande comprend par exemple un tableau comprenant des données représentatives d'emplacements ou de dispositifs de stockage, associées à un des deux types autorisés ou aux deux types autorisés. Ainsi les dispositifs de stockage compatibles avec les deux types de stationnement pourront être différenciés, par le module de commande, pour proposer des services de stationnement modulables.

Le dispositif de stockage représenté à la figure 1, comprend notamment un câble dont une extrémité est fixée et solidarisée au dispositif de stockage et dont l'autre extrémité est équipée d'un embout pouvant être verrouillé dans le dispositif de stockage. Ce type de dispositif de stockage pourra être utilisé, par exemple pour un cycle ou pour un objet comprenant un évidement formant un passage et délimité par un contour fermé, ce type d'objet pouvant être par exemple une raquette de tennis ou un volant d'un véhicule ou un appareil équipé d'une boucle de préhension ou le cadre d'un vélo.

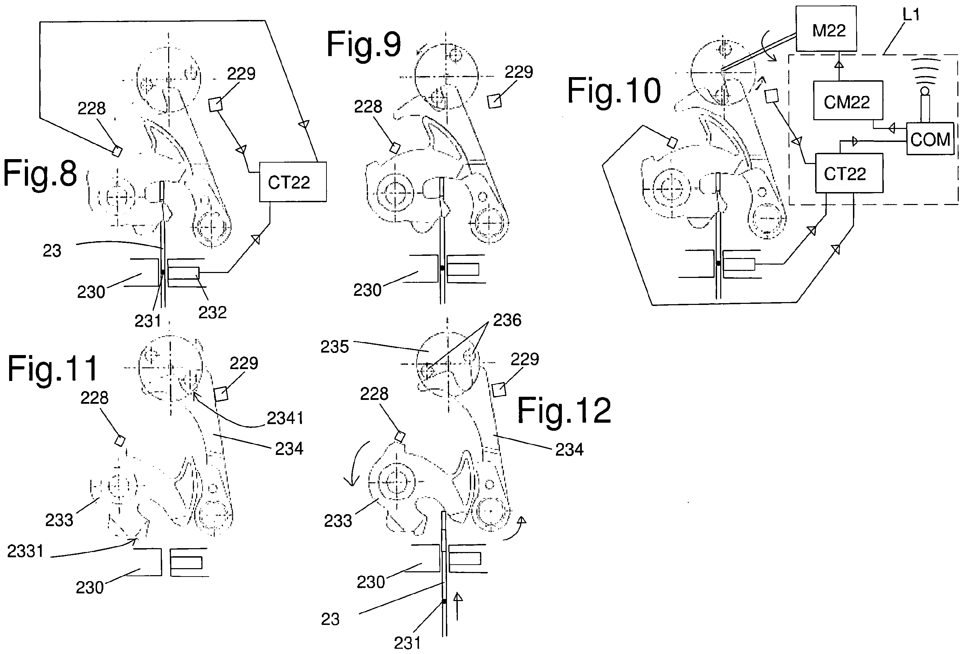

Un exemple de crochet (233) de verrouillage d'une gâche va maintenant être décrit en référence aux figures 8 à 12. Le crochet (233) de la gâche en position ouverte, représenté aux figures 11 et 12, pivote en position fermée lorsque l'organe (23) d'accrochage est introduit. La figure 12 représente l'insertion de l'organe (23) d'accrochage et la figure 8 représente l'organe d'accrochage inséré. L'organe d'accrochage comprend, par exemple, un évidemment délimité par un contour fermé dans lequel une partie (2331) saillante du crochet (233) s'insère pour verrouiller l'organe d'accrochage dans la gâche. Les figures 8 à 10 représentent des positions successives où des axes (236) de commandes fixés sur un disque (235) de commande, écartent un organe (234) de blocage du crochet (233) en position fermée. Les axes viennent par exemple s'appuyer dans un creux (2341) de l'organe de blocage. Le crochet (233) et l'organe (234) de blocage du crochet sont notamment actionnés chacun par un ressort. Le crochet tend à revenir en position de déverrouillage, tandis que l'organe (234) de blocage tend à se plaquer contre le crochet (233) pour bloquer le crochet atteignant sa position de verrouillage.

L'actionneur de la gâche comprend par exemple, un moteur (M22) entraînant en rotation le disque (235) de commande avec ses axes (236) saillants. Un circuit (CM22) électrique commande par exemple le moteur à l'arrêt ou en rotation dans un sens déterminé. Le circuit (CM22) de commande du moteur (M22) reçoit, par exemple, des commandes par le module (COM) de communication.

Des capteurs (228, 229) de position sont par exemple disposés dans le dispositif de stockage et produisent des signaux représentatifs de la position du crochet de verrouillage ou de l'organe de blocage. Un composant (CT22) de contrôle reçoit par exemple les signaux de contrôle des capteurs ou du lecteur, par exemple pour les transmettre, par le module (COM) de communication, à un dispositif de gestion.

D'autre type d'actionneur du dispositif de stockage peuvent être utilisés comme par exemple un bec d'une gâche poussé en position de verrouillage par un ressort et reculé en position de déverrouillage par un électro-aimant dont l'alimentation est commandée.

De manière non limitative, l'organe d'accrochage inséré dans le dispositif de stockage, comprend une étiquette (231) radiofréquence d'identification du cycle ou de l'utilisateur. L'étiquette radiofréquence, également appelée puce RFID (Radiofrequency Identification) comprend, par exemple, en mémoire un code d'identification du cycle ou de l'utilisateur. L'étiquette radiofréquence peut aussi contenir d'autres types de données comme par exemple des données d'abonnement ou des données d'identification d'un organe d'accrochage utilisable pour un unique dispositif de stockage. Ce type d'étiquette est par exemple utilisé pour un organe d'accrochage lié à cycle par un câble ou directement fixé sur l'avant du cadre du cycle ou fixé à l'extrémité d'un câble fixé au mur.

De manière non limitative, ce code peut être unique et correspondre, dans une base de données, à des données d'identification d'un client ou d'un cycle ou être associé à des données relatives à un abonnement ou un coût d'utilisation. Le dispositif de stockage comprend par exemple un lecteur (232) de type RFID intégré dans le dispositif de stockage. Ce lecteur (232) envoie, par exemple, des données représentatives du code d'identification lu, vers un module de contrôle disposé dans le dispositif de gestion ou dans un serveur central de gestion. Le lecteur (232) RFID est par exemple logé dans les cloisons (230) réalisant une ouverture ou une fente d'insertion dans le boîtier du dispositif de stockage. L'ouverture ou la fente d'insertion réalise par exemple des parois de guidage de l'organe (23) d'accrochage. Le lecteur est, par exemple positionné dans le dispositif de stockage pour venir en face ou à proximité de l'étiquette (231) radiofréquence en position verrouillée, comme représenté à la figure 8.

De manière non limitative, les bases de données sont stockées localement dans le cas d'un parc géré seul ou dans un serveur central de gestion permettant la gestion de plusieurs parcs. Les données d'identification lues par le dispositif de stockage sont, par exemple, transmises directement au serveur central de gestion ou par l'intermédiaire du dispositif de gestion du parc. Le dispositif (225) de gestion du parc comprend par exemple aussi un lecteur, par exemple de type RFID, permettant de lire les données mémorisées dans une carte portative communicante de type RFID. La carte est, par exemple, propre à un utilisateur et comprend des données d'identification de l'utilisateur ou comprend des données représentatives d'un abonnement valide ou d'un type d'abonnement ou de service pour un type d'objet à stocker.

Le lecteur RFID du dispositif de stockage peut aussi être adapté pour un objet électronique portatif propre à l'utilisateur. Cet objet portatif comprend par exemple un identifiant de l'utilisateur lu par ce lecteur. Le dispositif de stockage peut aussi comprendre un lecteur optique de codes à barre ou un lecteur biométrique, par exemple, pour lire une empreinte digitale de l'utilisateur. De manière non limitative, des données d'identification de l'utilisateur sont transmises par le dispositif de stockage au dispositif de gestion ou au serveur centrale de gestion. De manière non limitative, lors d'un envoi par le dispositif de stockage au serveur central de gestion, les données sont acheminées via le dispositif (225) de gestion ou directement par le dispositif (22, 221) de stockage au serveur central de gestion.

De manière non limitative, le dispositif de stockage peut être relié au réseau cellulaire de communication par ondes radiofréquence ou à un réseau local radiofréquence ou au réseau Internet, par un module (COM) de communication. Le dispositif de stockage peut aussi être relié par un réseau câblé, par exemple de type RS485, au dispositif (225) de gestion, le dispositif (225) de gestion étant, par exemple relié, au serveur central de gestion, par un réseau cellulaire radiofréquence ou par un réseau local radiofréquence ou par un réseau câblé ou par le réseau ADSL.

Si l'identification de l'utilisateur est réalisée directement par le dispositif (225) de gestion d'un parc, le dispositif (225) de gestion est par exemple réalisé sous la forme d'un pupitre comprenant un lecteur (R1) d'objet portable propre à l'utilisateur, tel qu'une carte d'identification ou une carte d'abonnement ou une carte bancaire. Le dispositif (225) de gestion comprend, par exemple un écran (DISP1) d'affichage et un clavier (KB1) de saisie. L'identification de l'utilisateur peut aussi être réalisée, de manière non limitative, par la saisie d'un code personnel de l'utilisateur. Ce code personnel est, par exemple, un code correspondant à un abonnement souscrit par l'utilisateur ou un code temporaire fourni à l'utilisateur pour une utilisation occasionnelle. Ce code personnel est par exemple fourni par le serveur central via un site Internet d'accès au serveur (SER1) central.

Un cycle privé stocké lors de la location d'emplacement ou un cycle public disponible à la location peut être équipé d'un lien comme par exemple un câble ou une chaîne annelée, au bout de laquelle est fixé un organe d'accrochage aux dispositifs de stockage. Cet organe (23) d'accrochage est par exemple fixé à un boîtier d'antivol, le boîtier d'antivol étant d'autre part fixé à la chaîne ou au câble (21). Ce boîtier d'antivol est ainsi mobile avec l'organe (23) d'accrochage. Le boîtier d'antivol est notamment équipé pour réaliser une fonction d'immobilisation du cycle hors des dispositifs de stockage.

Le boîtier d'antivol comprend par exemple une serrure (903) de verrouillage d'un logement (902) pour un embout (901) adapté pour s'insérer dans le logement (902) et être bloqué par la serrure (903). Cet embout (901) est par exemple fixé au cadre du vélo, l'ensemble comprenant l'organe d'accrochage et le boîtier d'antivol est par exemple accroché au cadre. Le câble a notamment une longueur minimum permettant le passage du câble autour d'un poteau ou d'autres objets fixes ou au travers des roues ou du cadre du cycle, jusqu'à l'embout adapté pour le logement du boîtier. Le logement (902) du boîtier est, par exemple, associé à une serrure actionnée par une clé pour le blocage de l'embout dans le logement du boîtier. La clé est par exemple maintenue dans la serrure dans une position non bloquante de la serrure, la clé pouvant être extraite dans la position bloquante de la serrure.

Selon une variante, la clé peut aussi comprendre une étiquette radiofréquence. Selon une variante, la clé peut aussi être retirée pour permettre de bloquer l'accès au logement vide.

Le logement comprend par exemple un cylindre mobile équipé d'une fente pour le passage du pêne de la serrure. Le cylindre mobile non enfoncé bloque, par exemple la fente. Le cylindre mobile poussé, par exemple par un ressort, est par exemple enfoncé sous la pression de l'embout adapté au logement, permettant alors au pêne de pénétrer dans la fente du logement et de s'accrocher avec l'embout enfoncé. L'embout est alors bloqué dans le logement du boîtier et la clé peut être retirée. De manière non limitative, l'utilisation du boîtier d'antivol fixé à l'organe d'accrochage, empêche l'accrochage simultané de l'organe d'accrochage dans un dispositif (22, 221) de stockage et l'accrochage du boîtier d'antivol sur un embout adapté.

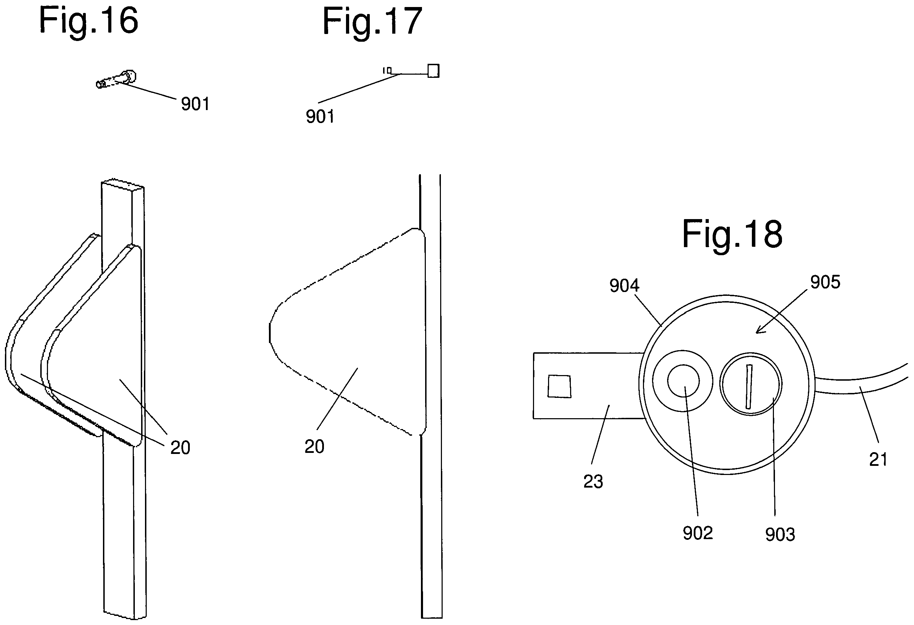

Selon une variante représentée aux figures 16 et 17, l'embout (901) adapté pour s'insérer dans le logement (902) du boîtier d'antivol, peut être scellé dans un mur ou être fixé au mobilier urbain.

Le boîtier d'antivol, comme représenté à la figure 18, comprend par exemple l'ouverture (902) du logement disposée sur une face (905), à côté de la serrure (903). Les bords (904) de cette face (905) sont par exemple prolongés au dessus de cette face, par exemple pour protéger une clé prisonnière retenue dans la serrure (903). Le boîtier comprend, par exemple, d'un côté l'organe (23) d'accrochage fixé au boîtier et de l'autre côté l'extrémité d'une chaîne annelée. La chaîne annelée est, par exemple fixée par son autre extrémité à un cycle ou à un objet à stocker. La chaîne ou le câble (21) fixé à l'objet à stocker peut ainsi réaliser deux types d'accrochage : d'une part sur un dispositif de stockage géré pour la location et d'autre part pour une immobilisation de l'objet privé ou public.

De façon avantageuse, l'organe d'accrochage équipé d'un composant (231) électronique de mémorisation communicant par ondes radiofréquences et noyé dans l'organe d'accrochage, permet une traçabilité de l'objet à stocker, comme par exemple le cycle. Ce composant noyé est par exemple une étiquette RFID. L'identifiant est par exemple propre à l'objet à stocker, comme par exemple un cycle, ou correspond à un type d'objet à stocker ou à un type d'utilisation, comme par exemple la location de cycles ou la location d'emplacements de stationnement pour cycle. Les utilisateurs peuvent par exemple aussi être identifiés par cette étiquette RFID. L'ensemble des identifiants mémorisés dans une base de données centrale permet, par exemple, une bonne traçabilité et des opérations dans plusieurs parcs de stationnement. La mémorisation de données représentatives de l'identifiant de l'objet à stocker dans un objet RFID noyé dans l'organe d'accrochage, lié à cet objet, associée à la mémorisation de données représentatives de l'identifiant de l'utilisateur dans un objet portable, permettent d'éviter d'avoir un équipement d'identification intégré à l'objet lui-même comme par exemple un cycle. De façon avantageuse, pour la location de cycle, tout type de cycle peut être utilisé pour un service de location.

Un kit de location de cycle ou d'emplacement de stationnement, comprenant un boîtier à solidariser au cycle et un organe d'accrochage en bout d'une chaîne ou d'un câble fixé au boîtier, peut aussi être facilement commercialisé. De manière non limitative, l'identification peut être réalisée par un objet communicant de type RFID noyé dans l'organe d'accrochage ou intégré dans un objet portable fourni à l'utilisateur.

Une puce RFID d'identification peut aussi être intégré dans des objets de location, comme par exemple des skis, la puce étant disposée à une hauteur correspondant à la hauteur des dispositifs de stockage.

Les services pouvant être mis en place sont ainsi plus nombreux et variés.

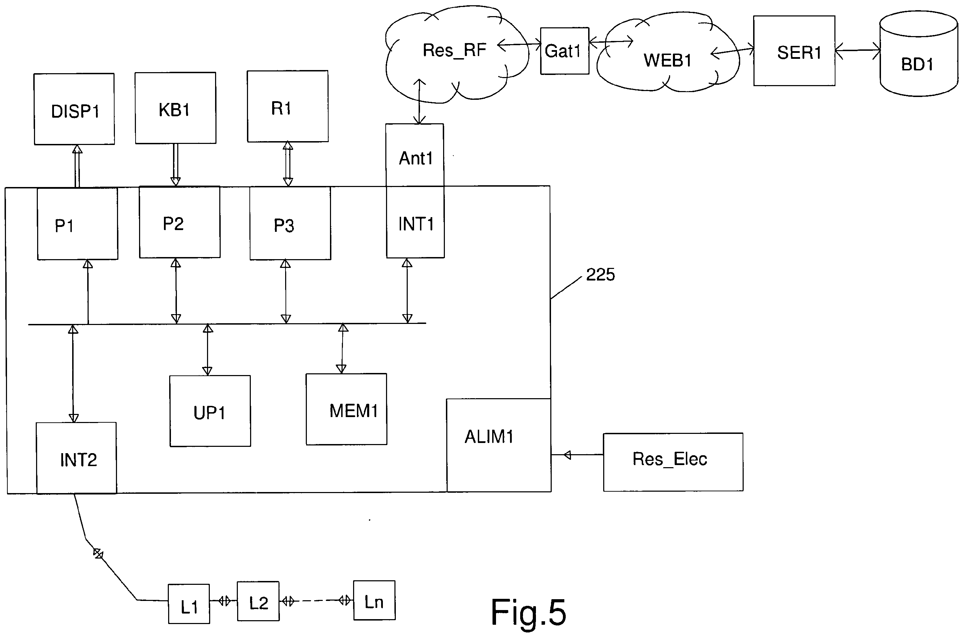

Un exemple de dispositif (225) de gestion va maintenant être décrit, en référence à la figure 5. Un dispositif de gestion comprend, par exemple, un composant (UP1) de traitement communiquant, par un bus avec une mémoire (MEM1) comprenant, par exemple, des instructions mémorisées de programmes ou des données mémorisées représentatives d'informations relatives aux clients ou aux objets à stocker. Une interface (P1) de commande d'un écran (DISP1) ou d'un composant d'affichage, reliée au bus est par exemple commandée par le composant de traitement (UP1). Un clavier (KB1) ou un composant de saisie est par exemple relié à une interface (P2) de communication reliée au bus et contrôlée par le composant (UP1) de traitement. Un lecteur (R1) d'objets électroniques communicants est par exemple connecté à une interface (P3) reliée au bus, permettant une communication du lecteur avec le composant (UP1) de traitement. Un dispositif (225) de gestion peut, par exemple, être basé sur une architecture d'ordinateur comprenant une carte mère équipée d'un port de connexion à un écran par exemple de type VGA, d'un port de connexion à un clavier ou d'une souris, par exemple de type PS2. Des ports de connexion série ou parallèle sont par exemple utilisés pour connecter la carte mère aux circuits de commande des gâches ou au lecteur d'identification d'objets électroniques communicants des utilisateurs.

Le dispositif (225) de gestion comprend, par exemple, un composant (ALIM1) de régulation en tension d'alimentation, connecté, par exemple, au réseau (Res_Elec) d'alimentation en énergie électrique.

De manière non limitative, le dispositif (225) de gestion comprend une interface (INT1) de communication avec un réseau permettant une connexion avec le serveur (SER1) distant de gestion centrale. Cette interface (INT1) de communication avec le réseau est, par exemple, du type modulation et démodulation de signaux radiofréquences émis ou reçus par une antenne (Ant1) de connexion avec un réseau (Res_RF) local ou étendu de communication par ondes radiofréquences. De manière non limitative, le serveur (SER1) central de gestion est un serveur relié directement au réseau de communication par ondes radiofréquences ou est relié à au réseau de communication par ondes radiofréquences par une passerelle (Gat1). Le serveur central de gestion appartient, par exemple, au réseau (WEB1) Internet. Ainsi de façon avantageuse, le serveur (SER1) central de gestion peut être accédé par des utilisateurs, via le réseau Internet, pour un paiement ou une souscription à un abonnement ou une réservation ou la consultation d'informations sur les services proposés, comme par exemple les emplacements de stationnement disponibles ou les objets stockés disponibles à la location. Les données gérées par le serveur central de gestion sont par exemple stockées dans une ou plusieurs bases de données (BD1, 801, 802, 803, 804). Le serveur de gestion centrale peut ainsi s'adapter à plusieurs type d'objets comme par exemple les cycles ou les raquettes de tennis ou des véhicules pouvant être stationnés à côté d'un dispositif de stockage associé à un câble de verrouillage.

Le dispositif (225) de gestion comprend par exemple une interface (INT2) de communication avec des circuits (L1, L2, Ln) de commande et de contrôle des dispositifs de stockage. Des dispositifs (22, 221) de stockage sont par exemple reliés à un dispositif (225) de gestion par un réseau locale câblé ou radiofréquence.

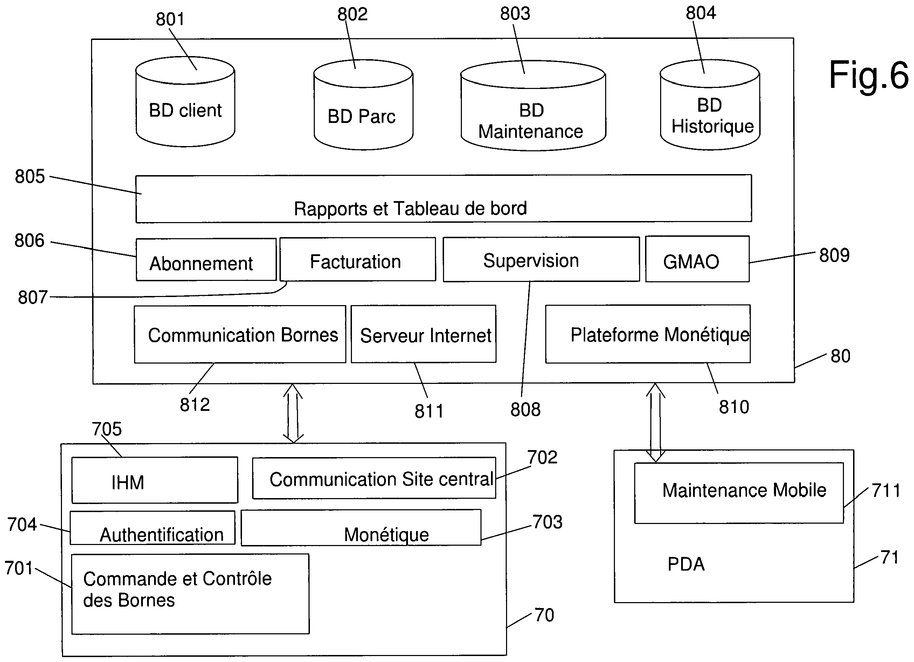

La figure 6 représente de manière non limitative, plusieurs modules dans un système de gestion. Ainsi le serveur central de gestion peut gérer une base (BD1) de données générale ou plusieurs bases de données pour des applications diverses. Le module principal (80) du serveur central gère par exemple, différents modules exécutés par exemple de façon simultanée selon un procédé multitâche, tels que :
- un module (812) de communication avec les dispositifs (225) de gestion ou avec les dispositifs (22, 221) de stockage,
- un module (811) serveur Internet de gestion de communication avec des clients utilisant un point d'accès à Internet,
- une plateforme (810) monétique permettant la gestion de paiement par un dispositif de gestion ou par Internet,
- un module GMAO (809) de gestion de maintenance assistée par ordinateur permettant à un opérateur chargé de la maintenance d'accéder à des services de maintenance en se connectant au serveur,
- un module (808) de supervision permettant par exemple à un administrateur du serveur de réaliser des modifications ou de consulter les programmes ou les bases de données,
- un module (807) de facturation réalisant des facturations, des archivages de factures payées ou un suivi des factures impayées,
- un module (806) de gestion des abonnements fournissant par exemple des identifiants ou des codes d'identification pour des utilisateurs,
- un module (805) de réalisation de rapports et de tableaux de bord.

De manière non limitative, le programme principal (70) d'un dispositif (225) de gestion comprend par exemple :
- un module (701) de contrôle et de commande des dispositifs,
- un module (702) de communication avec le serveur central de gestion,
- un module (703) de monétique,
- un module (704) d'authentification de données d'identification d'un utilisateur ou d'un cycle,
- un module (705) de gestion d'une interface d'utilisation, également appelée interface homme machine.

Un module de commande de dispositifs de stockage comprend par exemple un espace mémoire pour l'écriture et la lecture de données et un espace pour une bibliothèque de stockage, par exemple, des différents types d'étiquettes radiofréquences. Les données mémorisées dans les étiquettes radiofréquences sont par exemple des caractères ou des chiffres. Un premier type d'étiquette correspond, par exemple, à un accrochage pour des objets privés, lors de la location d'emplacements de stockage. Un second type d'étiquette correspond, par exemple, à un accrochage pour des objets publics en libre service, disponibles à la location. La distinction entre ces deux types peut être réalisée très simplement, un identifiant privé au format texte commence par exemple par les deux caractères « PR » et un identifiant public au format texte commence par exemple par les deux caractères « PU ». D'autres codes de différentiation peuvent aussi être employés.

De manière non limitative, les étiquettes radiofréquences sont des circuits passifs comprenant des données lues par un lecteur radiofréquence, ou les étiquettes radiofréquences peuvent être réalisées par un dispositif actif, par exemple de type NFC (Near Field Communication), réalisant une émulation d'étiquette RFID.

De manière non limitative, un appareil de maintenance pourra être réalisé portable, par exemple sous la forme d'un PDA (Personnal Digital Assistant) relié au réseau (Res_RF) de communication par ondes radiofréquences et communiquant avec le serveur central de gestion. Le PDA (71) exécute par exemple un programme (711) de maintenance.

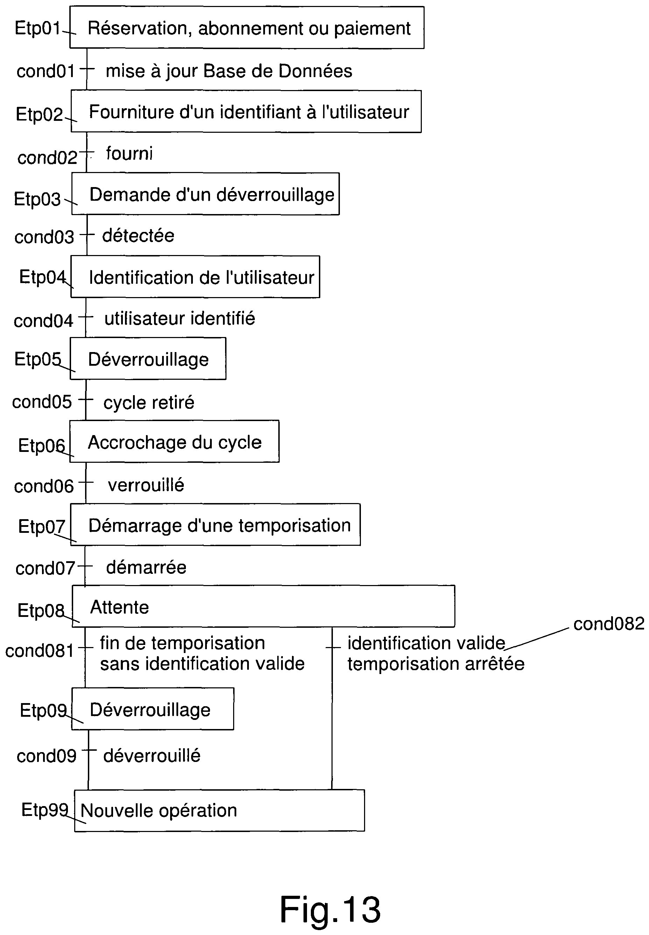

Un exemple de procédé de gestion de cycles pour une location de cycle va maintenant être décrit, en référence à la figure 13.

Pour emprunter un objet en location, comme par exemple cycle, un utilisateur réalise par exemple, une étape (Etp01) de réservation, d'abonnement ou de paiement, durant laquelle l'utilisateur fournit des informations d'identification personnelle ou relatives à sa banque. Les informations relatives à l'utilisateur sont enregistrées, par exemple, dans une base de données et associées à un identifiant de l'utilisateur. L'identifiant de l'utilisateur est par exemple créé lors de cette étape. Cette étape peut par exemple être réalisée par Internet ou par une station de travail d'un commerçant gérant sa propre base de données de gestion.

Après la mémorisation (cond01) d'informations concernant l'utilisateur associées à l'identifiant de l'utilisateur, l'identifiant est par exemple fourni au client lors d'une étape (Etp02) suivante. Cet identifiant peut être fourni, de manière non limitative, sous forme d'un code au format texte ou sous forme d'un objet électronique personnalisé. Un utilisateur souscrivant à un abonnement reçoit par exemple un objet de mémorisation comprenant des données représentatives de son identifiant, ces données étant lues par un lecteur à contact ou sans contact. L'objet de mémorisation est par exemple une carte à puce ou une carte magnétique ou une étiquette RFID. Le service de location d'objet, comme par exemple des cycles, peut être associé à des services d'utilisation des transports en commun ou à d'autres services, pour n'utiliser qu'une seule carte ou qu'un seul objet portatif communicant.

Après la fourniture (cond02) de son identifiant, l'utilisateur réalise par exemple une étape (Etp03) de demande de déverrouillage d'un objet en location, comme par exemple un cycle, afin d'utiliser de cet objet en location. La demande de déverrouillage est par exemple réalisée par l'utilisateur accédant à un dispositif (22, 221) de stockage ou accédant à un dispositif (225) de gestion de plusieurs dispositifs de stockage. La demande de déverrouillage est, par exemple, réalisée par un menu interactif ou simplement en passant son objet portatif communicant devant un lecteur.

Après la détection (cond03) de la demande de déverrouillage, une étape (Etp04) de vérification d'un identifiant de l'utilisateur est par exemple exécutée. Un code est, par exemple saisi par l'utilisateur ou son empreinte digitale est lue ou son objet portable comprenant ses données d'identification est lu par un lecteur. Après cette lecture le dispositif (22, 221) de stockage ou le dispositif (225) de gestion interroge, par exemple, un serveur de gestion de la base de données faisant correspondre à des identifiants d'utilisateur des données relatives à une autorisation d'emprunter un objet en location, comme par exemple un cycle. L'autorisation d'emprunter peut aussi être liée à un nombre maximum de location dépassé ou non. Le serveur de gestion de la base de données envoie, par exemple, une réponse représentative d'une autorisation ou non d'emprunter l'objet en location.

Après la réception d'une autorisation d'emprunt (cond04), le dispositif (22, 221) de stockage dans lequel un objet stocké est équipé d'une étiquette radiofréquence représentative d'une utilisation en location, reçoit par exemple une commande de déverrouillage lors d'une étape suivante (Etp05). L'utilisateur peut alors retirer l'objet en location, comme par exemple le cycle.

Après que l'objet en location ait été retiré (cond05) le capteur de position dans le dispositif (22, 221) de stockage produit par exemple un signal représentatif d'une position déverrouillée de la gâche du dispositif (22, 221) de stockage.

Après la détection d'une position déverrouillée de la gâche du dispositif (22, 221) de stockage, un signal de confirmation d'emprunt est, par exemple envoyé au serveur de gestion de la base de données. De manière non limitative, un identifiant du cycle emprunté, correspondant à l'étiquette radiofréquence associée à l'objet en location, est par exemple fourni en même temps au serveur de gestion de la base de données. La base de données est mise à jour avec une mémorisation de l'identifiant d'utilisateur associé à des données représentatives d'un emprunt supplémentaire en cours et à des données d'identification de l'objet en location, comme par exemple le cycle. De manière non limitative, un nombre maximum d'emprunt est mémorisé pour empêcher un utilisateur déjà identifié pour un nombre maximum de locations d'objet en location, de réaliser une location supplémentaire. Ainsi un couple formé par un identifiant d'objet en location et un identifiant d'utilisateur, est mémorisé dans la base de données ou dans un fichier de gestion.

Un objet en location peut ainsi être identifié par un identifiant représentatif du type d'objet en location. Les données d'identification associées à l'objet en location sont par exemple mémorisées dans l'objet communicant, tel qu'un label RFID, intégré dans l'organe d'accrochage lié à l'objet ou intégré directement dans une partie de l'objet venant en face du lecteur intégré au dispositif de stockage en position de stockage de l'objet.

Pour restituer l'objet en location, l'utilisateur réalise, par exemple une étape (Etp06) d'accrochage du cycle dans un dispositif (22, 221) de stockage. Un utilisateur peut par exemple déterminer si un dispositif est susceptible de stocker un cycle, grâce à des voyants témoins de l'état du dispositif (22, 221) de stockage. Un voyant rouge indique par exemple que l'accrochage n'est pas possible et un voyant vert indique, par exemple, une possibilité d'accrochage et de stockage. Deux voyants peuvent aussi être commandés pour indiquer l'un que le dispositif de stockage permet le stockage d'objets disponibles à la location et l'autre indiquant que le stockage d'objet privé est permis. Le dispositif de stockage commandé par le module de commande, peut ainsi accepter un ou deux types d'objets ou rejeter un type d'objet.

Après le verrouillage (cond06) du dispositif de stockage, un organe d'accrochage étant par exemple bloqué dans le dispositif de stockage, une étape (Etp07) d'initialisation d'une temporisation est, par exemple, réalisée. La temporisation a par exemple une durée déterminée permettant de réaliser une ou plusieurs opérations par l'utilisateur.

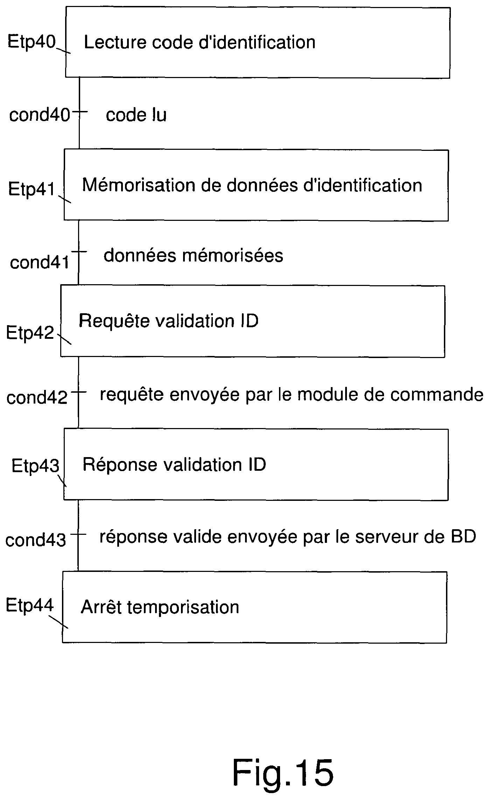

Après le démarrage (cond07) de la temporisation, une étape (Etp08) d'attente d'identification de l'utilisateur, est par exemple réalisée. Un exemple de validation de données d'identification de l'utilisateur est représenté, de manière non limitative, à la figure 15.

Si l'objet en location, comme par exemple un cycle, est équipé d'un objet de mémorisation intégré dans son organe d'accrochage, l'identification de l'objet en location est, par exemple réalisée dès le démarrage de la temporisation. L'identifiant de l'objet en location est, par exemple envoyé au serveur de gestion de la base de données qui associe un identifiant d'utilisateur à l'identifiant de l'objet en location reçu et met à jour la base de données en déduisant un emprunt en cours associé à l'identifiant de l'utilisateur. L'identifiant de l'objet emprunté, précédemment associé à l'identifiant de l'utilisateur, est par exemple supprimé de la base de données. L'utilisateur a ainsi été identifié directement par l'identifiant de l'objet en location emprunté.

Une identification d'utilisateur peut aussi être requise, par exemple, si l'identifiant de l'objet en location n'est pas un identifiant propre mais un identifiant d'un type déterminé d'objet en location. Pour la location de skis, une paire de skis comprend, par exemple, avantageusement une étiquette RFID noyée dans le corps du ski, permettant une restitution automatique des skis ou permettant un stockage temporaire sécurisé dans des dispositifs de stockage. L'utilisateur réalise par exemple une identification auprès du dispositif (22, 221) de stockage ou auprès du dispositif (225) de gestion du dispositif (22, 221) de stockage. Après la lecture (Etp40) ou la saisie ou le décodage d'un identifiant de l'utilisateur, une requête de demande de validation de cet identifiant d'utilisateur est par exemple envoyée (Etp42) au serveur de gestion de la base de données. Le serveur de gestion de la base de données réalise par exemple une recherche et détermine si l'identifiant est correct ou non. L'identifiant d'utilisateur est, par exemple transmis avec un identifiant de l'objet en location, comme par exemple un cycle.

Si l'identifiant d'utilisateur est valide, une mise à jour de la base de données est, par exemple réalisée et une réponse de validation d'identification est par exemple transmise (Etp43) par le serveur central de gestion, au dispositif (225) de gestion ou au dispositif (22, 221) de stockage.

Après la validation de l'identification, la temporisation est, par exemple arrêtée (Etp44). Si (cond082) la temporisation est arrêtée une opération suivante est traitée (Etp99), tandis que le verrouillage est maintenu. La durée entre l'étape (Etp05) de déverrouillage et l'étape (Etp08) d'attente correspond par exemple à une durée de location de l'objet en location comme par exemple un cycle.

Si (cond081) aucune identification n'est réalisée avant la fin de la temporisation, la gâche du dispositif de stockage est, par exemple commandée déverrouillée lors d'une étape (Etp09) suivante. Après le déverrouillage (cond09), une opération suivante est, par exemple traitée (Etp99).

Un déverrouillage peut aussi être commandé après l'accrochage d'un objet équipé d'une étiquette radiofréquence dont le type n'est pas accepté dans le dispositif de stockage commandé par le module de commande.

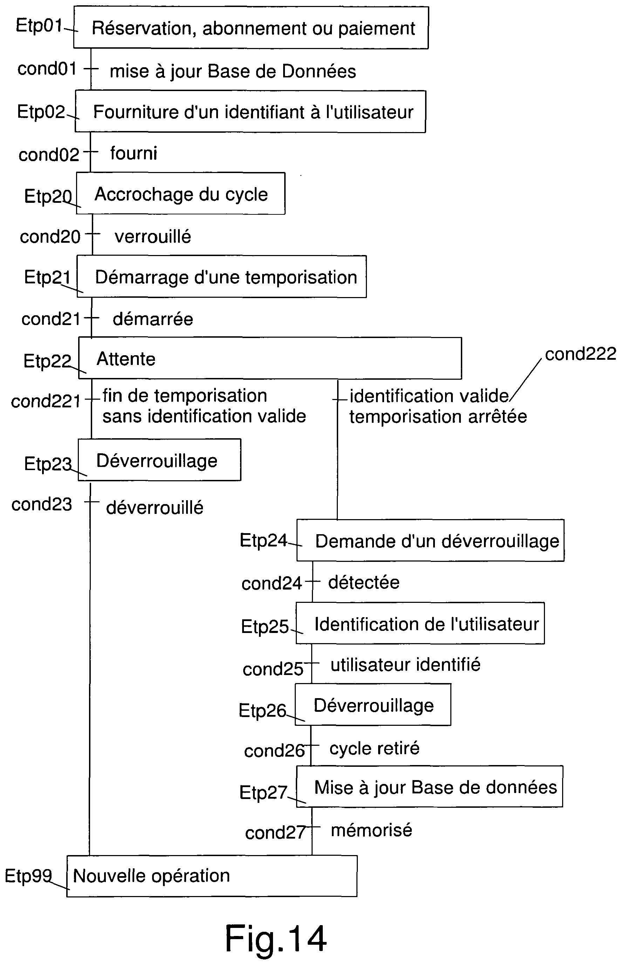

Un exemple de procédé pour l'utilisation contrôlée d'un stationnement va maintenant être décrit, en référence à la figure 14. Le client réalise par exemple une étape (Etp01) d'abonnement ou de réservation ou de paiement d'un emplacement, par exemple en accédant au serveur central via Internet.

Après (cond01) la validation et la mise à jour de la base de données ou d'un fichier central de mémorisation, une étape (Etp02) de fourniture d'un identifiant à l'utilisateur est, par exemple exécutée. L'identifiant est par exemple mémorisé dans un objet portatif ou fourni par mail au format texte ou au format image pour être imprimé.

Après avoir reçu son identifiant (cond02), le client peut accrocher son objet à stocker, comme par exemple un cycle, lors d'une étape (Etp20) suivante. Le client choisit par exemple un parc proposant des dispositifs (22, 221) de stockage disponibles pour une utilisation en location d'un emplacement de stationnement.

Après le verrouillage (cond20) du dispositif de stockage, détecté par exemple par les capteurs du dispositif de stockage, une temporisation est, par exemple démarrée lors d'une étape suivante (Etp21).

Après le démarrage (cond21) de la temporisation, une étape (Etp22) d'attente est, par exemple réalisée. Durant l'étape (Etp22) d'attente l'utilisateur peut par exemple s'identifier par une étape (Etp40) de lecture d'un code d'identification, comme représenté à la figure 15.

Après la lecture du code (cond40), une étape (Etp41) de mémorisation de données d'identification correspondantes est, par exemple réalisée.

Après la mémorisation (cond41) des données d'identification, une requête de validation d'identification des données est, par exemple, envoyée par le module de vérification ou par le module de commande, au serveur central de gestion, lors d'une étape suivante (Etp42).

Après l'envoi de la requête (cond42), le serveur central envoie, par exemple une réponse comprenant la validation ou non des données d'identification précédemment transmises, lors d'une étape suivante (Etp43).

Après l'envoi (cond43) d'une réponse de validation par le serveur, cette réponse étant, par exemple, reçue par le module de commande durant l'étape d'attente, le module de commande réalise par exemple un arrêt de la temporisation, lors d'une étape (Etp44) suivante. L'arrêt de la temporisation est, par exemple associé à une mémorisation de l'identifiant d'utilisateur associée à des données représentatives de l'emplacement occupé par l'objet privé de cet utilisateur. Les données représentatives de l'emplacement occupé correspondent par exemple aux données d'identification du premier type mémorisées dans l'organe d'accrochage associé au dispositif de stockage. Cet organe d'accrochage associé est par exemple disposé en bout d'une chaîne de verrouillage fixée au mur ou à un poteau et solidarisée au dispositif de stockage. Ainsi un couple formé par un identifiant d'emplacement et un identifiant d'utilisateur, est mémorisé dans un fichier de gestion ou dans une base de données.

Si aucun arrêt n'est réalisé, l'étape d'attente est suivie, à la fin de la temporisation (cond221) d'une étape (Etp23) de déverrouillage du dispositif de stockage. Puis après le déverrouillage (cond23), une opération suivante est par exemple traitée (Etp99).

Après une identification réalisée avec succès et un arrêt de la temporisation (cond222), par un module de commande, l'utilisateur utilise l'emplacement en location. Puis l'étape d'attente est suivie d'une étape (Etp24) de demande de déverrouillage exécutée, lorsque l'utilisateur veut récupérer son objet stocké, comme par exemple un cycle. La durée entre l'étape (Etp22) d'attente et l'étape (Etp24) de demande de déverrouillage correspond par exemple à une durée de location de l'emplacement de stationnement. La demande de déverrouillage est par exemple réalisée par un menu ou par un passage d'un objet communicant devant un lecteur d'un dispositif de stockage ou d'un dispositif de gestion.

Après détection (cond24) de cette demande, une étape (Etp25) d'identification de l'utilisateur est, par exemple exécutée. L'identification de l'utilisateur est, par exemple réalisée auprès d'un dispositif de stockage ou auprès d'un dispositif de gestion, par l'utilisateur, comme précédemment décrit.

Après l'identification (cond25) validée de l'utilisateur, par exemple en accord avec le serveur central, l'identifiant de l'emplacement associé à l'identifiant d'utilisateur est retrouvé pour commander la gâche du dispositif de stockage en position déverrouillée, lors d'une étape suivante (Etp26).

Le cycle peut alors être retiré (cond26), la détection de l'extraction étant réalisée par les capteurs du dispositif de stockage, une étape (Etp27) de mise à jour de la base de données ou du fichier de mémorisation est réalisée. L'identifiant d'emplacement n'est plus associé à l'identifiant d'utilisateur. Le couple précédemment mémorisé est, par exemple, supprimé.

Après (cond27) la mise à jour du fichier de mémorisation ou de la base de données, une opération suivante est par exemple traitée (Etp99).

De manière non limitative, les dispositifs de stockage sont équipés de voyants, par exemple de couleur verte, indiquant par exemple que le dispositif de stockage est disponible pour un accrochage ou qu'un objet stocké est disponible pour une location. A l'inverse des voyants par exemple de couleur rouge, indiquent que l'emplacement n'est pas disponible ou qu'un objet stocké ne peut pas être emprunté. Deux voyants sont par exemple représentatifs d'un type d'utilisation commandée, comme une utilisation de location de l'emplacement ou une utilisation de stockage d'objet publics disponibles à la location ou les deux types d'utilisation.

De façon avantageuse, les parcs peuvent servir à la fois de stationnements surveillés pour des objets stockés appartenant à des utilisateurs et peuvent servir aussi de fournisseurs d'objets disponibles à la location, comme par exemple des vélos en libre service. L'entrée d'un parc sera par exemple contrôlée par un portillon d'accès ouvert en présentant son badge ou son objet communicant à un lecteur du portillon. Les parcs seront par exemple cloisonnés, par exemple par un mur ou du grillage, pour améliorer la sécurité.

De manière non limitative, un dispositif de stockage, comme représenté à la figure 1, est associé à un câble ayant une extrémité fixe par rapport au dispositif de stockage et son autre extrémité équipée d'un organe d'accrochage dans lequel est noyé un objet communicant de type RFID. Cette étiquette RFID comprend par exemple des données représentatives de ce type d'organe d'accrochage non lié à l'objet à stocker et représentatives d'une identification de cet organe d'accrochage. Le module de contrôle du lecteur intégré au dispositif de stockage et le module de commande de la gâche du dispositif de stockage sont par exemple agencés de façon à détecter ce type d'organe d'accrochage et par comparaison avec un identifiant mémorisé d'autorisation, à détecté cet organe d'accrochage en particulier pour pouvoir déclencher un déverrouillage pour tout autre organe d'accrochage du même type mais ne correspondant pas à l'identifiant mémorisé. De cette façon un organe d'accrochage fixé au mur ne peut être utilisé que pour un seul dispositif de stockage. De manière non limitative les modules de commande et de contrôle d'un dispositif de stockage, sont agencés de façon à différencier une étiquette RFID de type organe d'accrochage pour objet public disponible à la location ou organe d'accrochage pour objet privé utilisant des emplacements de stationnement en location. Deux structures de données d'identification sont par exemple utilisées pour permettre après un test de la structure des données d'identification de déterminé le type d'organe d'accrochage inséré dans le dispositif de stockage.

Un dispositif de stockage commandé par un module de commande peut aussi être associé à une adresse ou un identifiant propre. Lors d'un stockage le module de commande de plusieurs dispositifs de stockage associe ainsi l'identifiant d'utilisateur avec l'identifiant ou l'adresse du dispositif de stockage. Ainsi lors du déverrouillage le dispositif de gestion retrouve en mémoire l'adresse ou l'identifiant du dispositif de stockage à déverrouiller, correspondant à l'identifiant d'utilisateur. L'identifiant du dispositif de stockage peut aussi être réalisé par l'identifiant noyé dans l'organe d'accrochage et lu par le lecteur intégré au dispositif de stockage.

## Revendications

1. Système de stockage et de déstockage d'objets pour la location d'emplacements ou pour la location d'objets stockés, comprenant un dispositif (22) de stockage, comprenant ;
• un actionneur de verrouillage ou de déverrouillage,
• un lecteur d'objets portatifs communiquant avec un système de traitement commandant l'actionneur de verrouillage ou de déverrouillage,
le lecteur d'objets portatifs étant capable de lire un type de code d'identifiant d'un utilisateur ou de droits d'utilisateur dans un objet portatif,
le système de stockage et de déstockage d'objets étant **caractérisé en ce que** le dispositif de stockage comporte en outre un lecteur (232) sans contact communiquant avec le système de traitement commandant l'actionneur de verrouillage ou de déverrouillage,
le lecteur sans contact étant capable de lire :
- un premier type de code d'identifiant dans un second type d'étiquette liée à un objet à louer, ou
- un second type de code d'identifiant dans un premier type d'étiquette liée à un organe de verrouillage d'un emplacement à louer,
et **en ce que** le système de traitement commandant l'actionneur de verrouillage ou de déverrouillage comprend un module de commande,
le module de commande étant apte, à différencier le premier type de code d'identifiant dans une étiquette lue liée à un objet à louer, du second type de code d'identifiant dans une étiquette lue liée à un organe de verrouillage d'un emplacement à louer,
le verrouillage d'emplacements ou de dispositifs de stockage, étant autorisé par le module de commande selon le type de l'identifiant reconnu et le système comprend une pluralité de dispositifs (22) de stockage pouvant bloquer chacun un objet à stocker le système de traitement réalisant une commande de verrouillage ou de déverrouillage des actionneurs des dispositifs de stockage, au moins un premier des dispositifs de stockage étant associé à un organe (21) de verrouillage permettant la location d'un emplacement de stationnement correspondant au premier dispositif de stockage,
l'organe de verrouillage étant lié à une embase (241) fixe par rapport au premier dispositif de stockage associé,
l'organe de verrouillage étant lié à un premier organe (23) d'accrochage adapté pour s'accrocher au dispositif de stockage et comprenant une étiquette radiofréquence du premier type déterminé,
chaque dispositif de stockage comprenant un capteur (228, 229) de l'état verrouillé ou déverrouillé du dispositif de stockage, communiquant avec le système de traitement,
le système de traitement étant agencé de façon à mémoriser un couple formé par un identifiant de l'utilisateur et par un identifiant correspondant à l'emplacement du premier dispositif de stockage, lors de la détection d'un verrouillage du premier dispositif de stockage et de la lecture du premier type d'étiquette, une commande de déverrouillage n'étant envoyée par la suite au premier dispositif de stockage que si une nouvelle lecture d'identifiant d'utilisateur correspondant à cet identifiant d'utilisateur mémorisé, est réalisée, le système de traitement étant agencé de façon à mémoriser un couple formé par un identifiant de l'utilisateur et par un identifiant propre à un objet stocké disponible à la location, lors de la détection d'un déverrouillage d'un des dispositifs de stockage comprenant l'objet stocké disponible à la location et l'organe de verrouillage est un premier lien tel qu'une chaîne annelée ou un câble (21), les objets à stocker disponibles à la location étant chacun lié avec un second organe (23) d'accrochage mobile adapté pour s'accrocher au dispositif (22) de stockage et comprenant l'étiquette (231) radiofréquence du second type propre à chaque objet disponible à la location par un second lien tel qu'une chaîne ou un câble (21) reliant un objet disponible à la location avec son organe d'accrochage.

2. Système selon la revendication 1, **caractérisé en ce qu'**un identifiant d'utilisateur, lu par le lecteur d'objets portatifs, et un identifiant d'un organe de verrouillage d'un emplacement à louer, lu par le lecteur (232), déclenchent chacun un programme de traitement différent exécuté par le système de traitement.

3. Système selon la revendication 1 ou 2, **caractérisé en ce que** le lecteur sans contact est du type lecteur (232) d'étiquettes radiofréquence, les étiquettes étant liées à un objet à louer ou à un organe de verrouillage d'un emplacement à louer

4. Système selon la revendication 1 ou 2, **caractérisé en ce que** le lecteur d'objets portatifs est du type lecteur d'objets portatifs de type carte radiofréquence.

5. Système selon l'une des revendications 1 à 4, **caractérisé en ce que** le système de traitement est agencé de façon à déclencher le démarrage d'une temporisation de durée déterminée lors de la détection du verrouillage du premier dispositif de stockage et de la lecture d'une étiquette du premier type,
le système de traitement réalisant l'arrêt de la temporisation avant une fin de temporisation, en cas de lecture d'une identification d'utilisateur validé par un module de vérification d'autorisation de verrouillage, la fin de la temporisation déclenchant la commande de déverrouillage du dispositif (22) de stockage, par le système de traitement.

6. Système selon l'une des revendications 1 à 5, **caractérisé en ce qu'**il comprend un dispositif de surveillance vidéo des emplacements en communication avec le système de traitement.

7. Système selon l'une des revendications 1 à 6, **caractérisé en ce qu'**il comprend une enceinte disposée autour des dispositifs de stockage formant un parc comprenant un portillon d'accès dont l'ouverture est commandée par la lecture d'un identifiant d'utilisateur.

8. Système selon l'une des revendications 1 à 7, **caractérisé en ce que** le dispositif (22) de stockage comprend un boîtier équipé d'une fente d'insertion et de guidage d'organe (23) d'accrochage comprenant un évidement de contour fermé, la fente étant disposée en face d'un crochet (233) monté en rotation par rapport au boîtier, le crochet étant agencé de façon à se positionner en position verrouillée lors de l'insertion d'organe d'accrochage, un premier ressort entraînant le crochet vers une position déverrouillée dans laquelle une partie (2331) saillante du crochet s'insère dans un évidement d'organe d'accrochage, un organe (234) de blocage du crochet en position verrouillée étant entraîné par un second ressort vers le crochet, l'organe de blocage étant éloigné du crochet par au moins une broche (236) décrivant une trajectoire circulaire, la broche s'insérant dans un évidement (2341) de contour ouvert de l'organe de blocage pour entraîner l'organe de blocage, la broche étant entraînée par un moteur piloté par le système de traitement.

9. Système selon l'une des revendications 1 à 8, **caractérisé en ce que** l'objet à louer est un cycle, le dispositif (22) de stockage comprenant un dispositif (20) de maintien d'une roue de cycle, comprenant deux plaques parallèles entre elles et liées à un poteau ou à un mur (3) supportant le dispositif de stockage.

10. Système selon la revendication 9, **caractérisé en ce que** le dispositif d'accrochage mobile lié à un cycle par un lien tel qu'une chaîne annelée, est fixé à un boîtier mobile avec le dispositif (23) d'accrochage mobile, le boîtier comprenant une serrure actionnée par une clé pour le verrouillage dans un logement de réception d'un embout d'immobilisation du cycle hors des dispositifs de stockage, la serrure étant agencée pour ne permettre une extraction de la clé que lorsque l'embout d'antivol est verrouillé dans son logement, l'embout d'antivol étant fixé au cycle ou à un point fixe appartenant à un mur ou à du mobilier urbain.

11. Système selon l'une des revendications 1 à 10, **caractérisé en ce qu'**il comprend un serveur (SER1) de gestion d'une base (BD1) de données réalisant la mémorisation d'identifiants d'utilisateurs associés chacun à un identifiant de l'emplacement de l'objet stocké, lors de locations d'emplacement de stationnement,
ou réalisant la mémorisation d'identifiants d'utilisateurs associés chacun à un identifiant de l'objet loué, le serveur (SER1) de gestion étant en communication avec le système de traitement par une liaison de communication.

12. Système selon la revendication 11, **caractérisé en ce que** l'identifiant de l'emplacement de l'objet (1) stocké correspond à un identifiant d'organe de verrouillage ou une référence ou une adresse du dispositif de stockage.

13. Système selon la revendication 11 ou 12, **caractérisé en ce que** la liaison de communication avec le serveur (SER1) de gestion de la base de données est réalisée via un réseau (Res_RF) de communication par ondes radiofréquences.

14. Système selon l'une des revendications 11 à 13, **caractérisé en ce que** les dispositifs (22) de stockage sont reliés, par un réseau câblé d'alimentation et de communication, à un dispositif (225) de gestion comprenant le système de traitement, le dispositif (225) de gestion étant relié à un réseau de distribution d'électricité,
les dispositifs de stockage étant montés sur des poteaux, au moins un tube (224) de section triangulaire ou rectangulaire, fixé au sol (3) ou affleurant avec le sol, entourant et protégeant le réseau câblé.

15. Système selon la revendication 14, **caractérisé en ce que** le serveur comprend au moins :
- un module (812) de communication avec les dispositifs de stockage ou avec le dispositif de gestion d'une pluralité de dispositifs de stockage, ou
- un module (806) de gestion d'abonnements souscrits par des utilisateurs, ou
- un module (807) de facturation de services aux utilisateurs, ou
- un module (808) de supervision du serveur de gestion et des bases de données, ou
- un module (809) de gestion de maintenance assistée par ordinateur, ou
- une plateforme (810) monétique réalisant des opérations sécurisées bancaires, ou
- un serveur (811) Internet de gestion d'un site Internet.

16. Système selon la revendication 14 ou 15, **caractérisé en ce que** le dispositif de gestion comprend:
- un module (705) de gestion d'interface homme machine comprenant au moins un composant de saisie d'un code d'identification de l'utilisateur pour la mise à jour des données mémorisées d'identification, un composant d'affichage et un lecteur d'objets portables électroniques comprenant chacun des données d'identification de l'utilisateur pour la mise à jour des données mémorisées d'identification, ou
- un module (702) de gestion des communications avec le serveur de gestion par ondes hertziennes ou par réseau câblé ou
- un module (703) monétique de gestion de paiements par les utilisateurs, ou
- le module (704) de vérification d'identification pour une authentification des données mémorisées d'identification de l'utilisateur ou du cycle, ou
- le module (701) de commande pour des contrôles et des commandes des dispositifs de stockage reliés par un réseau local, au dispositif de gestion.

17. Système selon la revendication 16, **caractérisé en ce que** le système de traitement est agencé de façon à commander les dispositifs de stockage pour autoriser l'accrochage uniquement des objets publics disponibles à la location ou pour autoriser l'accrochage uniquement des objets privés à stocker ou pour autoriser l'accrochage des objets publics ou privés indifféremment, un déverrouillage étant commandé suite à la détection d'un verrouillage associé à la détection d'un type d'objet non autorisé.

18. Système selon l'une des revendications 11 à 15, **caractérisé en ce que** le serveur gère une pluralité de bases de données parmi :
- une base (801) de données de clientèle comprenant au moins des données d'identification d'utilisateurs,
- une base (802) de données de gestion de parcs de stationnement comprenant au moins des données représentatives d'un nombre de dispositifs de stockage fonctionnels et d'un nombre de dispositifs de stockage occupés par des cycles pour chaque parc,
- une base (803) de données de maintenance comprenant au moins des données représentatives d'opérations de maintenance à réaliser,
- une base (804) de données d'archivage comprenant au moins des données représentatives d'opérations précédemment réalisées concernant des verrouillages ou déverrouillage de dispositifs de stockage.

19. Procédé de stockage et de déstockage d'objets pour la location d'emplacements ou pour la location d'objets stockés, comprenant un dispositif (22) de stockage comprenant un actionneur de verrouillage ou de déverrouillage, un lecteur d'objets portatifs communiquant avec un système de traitement commandant l'actionneur de verrouillage ou de déverrouillage, un module de commande et un lecteur (232) sans contact communiquant avec le système de traitement commandant l'actionneur de verrouillage ou de déverrouillage, le procédé comprend au moins :
- une étape de lecture, par le lecteur d'objets portatifs, de données représentatives d'un type de code d'identifiant d'un utilisateur ou de droits de l'utilisateur, dans un objet portatif communicant,
**caractérisé en ce qu'**il comprend en outre :
- une étape de lecture, par le lecteur (232) sans contact, de données représentatives d'un premier type de code d'identifiant dans une étiquette liée à un objet à louer, ou d'un second type de code d'identifiant dans une étiquette liée à un organe de verrouillage d'un emplacement à louer,
- une étape de détermination du type de code d'identifiant dans l'étiquette lue par le module de commande après un test de la structure des données d'identification,
- une étape d'autorisation du verrouillage selon le type d'identifiant déterminé.

20. Procédé selon la revendication 19, **caractérisé en ce que** la lecture des données représentatives du code d'identifiant d'un utilisateur et la lecture des données représentatives du code d'identifiant de l'étiquette liée à l'organe de verrouillage de l'emplacement à louer déclenchent des opérations de traitement différentes.

21. Procédé selon la revendication 19 ou 20, **caractérisé en ce qu'**une pluralité de dispositifs (22) de stockage étant commandée par le système de traitement, chaque dispositif de stockage pouvant bloquer un objet (1) à stocker, chaque dispositif (22) de stockage comprenant un capteur de verrouillage contrôlé par le système de traitement commandant le verrouillage ou le déverrouillage des dispositifs de stockage, le procédé comprend une étape (Etp06, Etp20) de verrouillage du premier des dispositifs de stockage par l'utilisateur, provoquant la détection du verrouillage du premier dispositif de stockage.

22. Procédé selon la revendication 21, **caractérisé en ce qu'**il est suivi de :
- une étape de détection d'une étiquette radiofréquence correspondant à un identifiant d'un objet disponible à la location,
- une étape de mise à jour d'un espace mémoire, accédé par le système de traitement, de mémorisation de couples formés d'un identifiant de l'utilisateur et d'un identifiant de l'objet stocké où le couple correspondant à l'identifiant d'objet lu est supprimé.

23. Procédé selon la revendication 22, **caractérisé en ce qu'**il est suivi de :
- une étape de détection d'une étiquette radiofréquence correspondant à un identifiant d'emplacement disponible à la location,
- une étape de lecture d'un objet portatif correspondant à un identifiant de l'utilisateur,
- une étape de validation vérification l'état valide ou non de l'identifiant de l'utilisateur,
- une étape de mémorisation du couple formé par l'identifiant d'utilisateur valide et l'identifiant d'emplacement dans l'espace mémoire.

24. Procédé selon la revendication 23, **caractérisé en ce que** en cas d'échec de lecture de l'identifiant d'utilisateur ou en cas d'échec de validation de l'identifiant d'utilisateur invalide, le dispositif de stockage est alors commandé déverrouillé.

25. Procédé selon la revendication 23 ou 24, **caractérisé en ce que** l'étape de détection de l'étiquette radiofréquence correspondant à l'identifiant d'emplacement disponible à la location, est suivie d'une étape de démarrage d'une temporisation de durée déterminée,
la temporisation étant arrêtée avant une fin de temporisation en cas d'identifiant d'utilisateur validé correspondant au maintien du verrouillage ou
la fin de la temporisation correspondant à l'invalidation de validation l'identifiant d'utilisateur et étant suivie du déverrouillage.

26. Procédé selon l'une des revendications 23 à 25, **caractérisé en ce que** le dispositif (22) de stockage comprenant une gâche de verrouillage d'un organe (23) d'accrochage, le système de traitement commandant la gâche au moins en position verrouillée et la gâche étant agencée de façon à se positionner en position de verrouillage lors de l'insertion de l'organe d'accrochage dans la gâche, l'étiquette (231) radiofréquence étant noyée dans l'organe (23) d'accrochage ou dans l'objet (1) à stocker, le lecteur d'étiquettes radiofréquences étant disposé en face de l'étiquette radiofréquence noyée, dans une position bloquée de l'objet à stocker.

27. Procédé selon la revendication 26, **caractérisé en ce que** le système de traitement communiquant avec un serveur (SER1) de gestion d'une base (BD1) de données,
l'étape de vérification de l'état de l'identifiant de l'utilisateur comprend:
- une étape (Etp42) de transmission, au serveur de gestion de la base de données, d'au moins l'identifiant de l'utilisateur associé à l'identifiant d'emplacement correspondant à l'identifiant lu de l'organe d'accrochage bloqué dans le dispositif de stockage en position verrouillée ou à une référence ou une adresse du dispositif de stockage mémorisée par le système de traitement,
- une étape d'attente de la réponse du serveur de gestion de la base de données, le serveur réalisant une recherche, dans la base de données, de données associées à l'identifiant d'utilisateur et représentatives d'une autorisation de verrouillage,
- une étape de réception de données transmises par le serveur de gestion, représentatives de l'autorisation validée de verrouillage correspondant à l'état valide de l'identifiant d'utilisateur.

28. Procédé selon l'une des revendications 23 à 27, **caractérisé en ce qu'**il est précédé, lors d'une location de l'objet à stocker, de :
- une étape (Etp01) de réservation de l'objet à stocker ou de souscription à un abonnement à un service de location d'objets à stocker ou de paiement d'une location de l'objet à stocker, par l'utilisateur, auprès d'une station de paiement, d'abonnement ou de réservation,
- une étape (Etp02) de fourniture, à l'utilisateur d'un identifiant propre à l'utilisateur, après la réservation ou la souscription à l'abonnement ou le paiement validé par la station,
- une étape (Etp03) de demande, par l'utilisateur, d'un déverrouillage du cycle, cette demande étant réalisée auprès du dispositif de stockage ou auprès d'un dispositif de gestion comprenant le système de traitement,
- une étape (Etp04) d'identification de l'utilisateur par le système de traitement comprenant la mémorisation du couple comprenant l'identifiant d'utilisateur associé à l'identifiant de l'objet loué,
- une étape (Etp05) de commande, par le système de traitement, d'un déverrouillage du dispositif de stockage, permettant à l'utilisateur de retirer l'objet stocké.

29. Procédé selon l'une des revendications 23 à 27, **caractérisé en ce qu'**il est précédé, lors d'une location d'un emplacement de stationnement, de
- une étape (Etp01) de réservation d'emplacement de stationnement d'objet à stocker ou de souscription à un abonnement à un service de location d'emplacements de stationnement d'objets à stocker ou de paiement d'une location d'emplacement de stationnement de l'objet à stocker, par l'utilisateur auprès d'une station de paiement, d'abonnement ou de réservation,
- une étape (Etp02) de fourniture, à l'utilisateur, d'un identifiant propre à l'utilisateur, après la réservation ou la souscription à l'abonnement ou le paiement validé par la station,
et **en ce qu'**il est suivi de :
- une étape (Etp24) de demande, par l'utilisateur, d'un déverrouillage de l'objet stocké, cette demande étant réalisée auprès du dispositif de stockage ou auprès d'un dispositif de gestion comprenant le système de traitement,
- une étape (Etp25) d'identification de l'utilisateur auprès du dispositif de stockage ou auprès du dispositif de gestion, en correspondance avec l'identifiant d'utilisateur précédemment mémorisé,
- une étape (Etp26) de commande, par le système de traitement, du déverrouillage du dispositif de stockage permettant à l'utilisateur de retirer l'objet stocké,
- une étape (Etp27) suppression en mémoire du couple formé par l'identifiant d'utilisateur et l'identifiant d'emplacement loué.

## Patentansprüche

1. System zum Lagern und Auslagern von Gegenständen für die Miete von Plätzen oder für die Miete von gelagerten Gegenständen, umfassend eine Lagervorrichtung (22), umfassend:
- einen Aktuator zur Verriegelung oder Entriegelung,
- einen Leser von tragbaren Gegenständen, der mit einem Bearbeitungssystem, das den Aktuator zur Verriegelung oder Entriegelung steuert, kommuniziert,
wobei der Leser von tragbaren Gegenständen geeignet ist, einen Typ eines Identifizierungscodes eines Benutzers oder von Benutzerrechten in einem tragbaren Gegenstand zu lesen,
wobei das System zum Lagern und Auslagern von Gegenständen **dadurch gekennzeichnet ist, dass** die Lagervorrichtung ferner einen kontaktlosen Leser (232) umfasst, der mit dem Bearbeitungssystem, das den Aktuator zur Verriegelung oder Entriegelung steuert, kommuniziert,
wobei der kontaktlose Leser geeignet ist zu lesen:
- einen ersten Typ eines Identifizierungscodes in einem zweiten Typ eines mit einem zu mietenden Gegenstand verbundenen Etiketts, oder
- einen zweiten Typ eines Identifizierungscodes in einem ersten Typ eines mit einem Verriegelungselement eines zu mietenden Platzes verbundenen Etiketts,
und dass das Bearbeitungssystem, das den Aktuator zur Verriegelung oder Entriegelung steuert, ein Steuermodul umfasst,
wobei das Steuermodul geeignet ist, den ersten Typ eines Identifizierungscodes in einem mit einem zu mietenden Gegenstand verbundenen gelesenen Etikett von dem zweiten Typ eines in einem mit einem Verriegelungselement eines zu mietenden Platzes verbundenen gelesenen Etiketts zu unterscheiden,
wobei die Verriegelung von Plätzen oder Lagervorrichtung von dem Steuermodul je nach Typ des erkannten Identifikators gestattet wird,
und dass das System eine Vielzahl von Lagervorrichtungen (22) umfasst, die jeweils einen zu lagernden Gegenstand fixieren können, wobei das Bearbeitungssystem eine Steuerung einer Verriegelung oder Entriegelung der Aktuatoren der Lagervorrichtungen durchführt, wobei mindestens eine erste der Lagervorrichtungen einem Verriegelungselement (21) zugeordnet ist, das die Miete eines Abstellplatzes entsprechend der ersten Lagervorrichtung ermöglicht,
wobei das Verriegelungselement mit einem Sockel (241) verbunden ist, der in Bezug zur ersten zugehörigen Lagervorrichtung feststehend ist,
wobei das Verriegelungselement mit einem ersten Befestigungselement (23) verbunden ist, das geeignet ist, sich an der Lagervorrichtung zu befestigen und ein Funkfrequenzetikett des ersten bestimmten Typs umfasst,
wobei jede Lagervorrichtung einen Sensor (228, 229) für den verriegelten oder entriegelten Zustand der Lagervorrichtung umfasst, der mit dem Bearbeitungssystem kommuniziert,
wobei das Bearbeitungssystem dazu vorgesehen ist, ein Paar, das von einem Identifikator des Benutzers und von einem Identifikator, der dem Platz der ersten Lagervorrichtung entspricht, gebildet ist, bei der Erfassung einer Verriegelung der ersten Lagervorrichtung und dem Lesen des ersten Etikettentyps zu speichern, wobei ein Entriegelungsbefehl in der Folge nur dann an die erste Lagervorrichtung gesandt wird, wenn ein neuerliches Lesen eines Benutzeridentifikators, der diesem gespeicherten Benutzeridentifikator entspricht, erfolgt, wobei das Bearbeitungssystem dazu vorgesehen ist, ein Paar, das von einem Benutzeridentifikator und von einem Identifikator, der einem zur Miete stehenden gelagerten Gegenstand eigen ist, gebildet ist, bei der Erfassung einer Entriegelung einer der Lagervorrichtungen, umfassend den zur Miete stehenden gelagerten Gegenstand, zu speichern, und wobei das Verriegelungselement eine erste Verbindung, wie eine Wellkette oder ein Seil (21), ist, wobei die zur Miete stehenden zu lagernden Gegenstände jeweils mit einem zweiten beweglichen Befestigungselement (23) verbunden sind, das geeignet ist, sich an der Lagervorrichtung (22) zu befestigen, und umfassend das Funkfrequenzetikett (231) des zweiten Typs, das jedem zur Miete stehenden Gegenstand eigen ist, durch eine zweite Verbindung, wie eine Kette oder ein Seil (21), das einen zur Miete stehenden Gegenstand mit seinem Befestigungselement verbindet.

2. System nach Anspruch 1, **dadurch gekennzeichnet, dass** ein Benutzeridentifikator, der von dem Leser von tragbaren Gegenständen gelesen wird, und ein Identifikator eines Verriegelungselements eines zu mietenden Platzes, der von dem Leser (232) gelesen wird, jeweils ein unterschiedliches Bearbeitungsprogramm auslösen, das von dem Bearbeitungssystem ausgeführt wird.

3. System nach Anspruch 1 oder 2, **dadurch gekennzeichnet, dass** der kontaktlose Leser vom Typ Funkfrequenzetikettenleser (232) ist, wobei die Etiketten mit einem zu mietenden Gegenstand oder einem Verriegelungselement eines zu mietenden Platzes verbunden sind.

4. System nach Anspruch 1 oder 2, **dadurch gekennzeichnet, dass** der Leser von tragbaren Gegenständen vom Typ Leser von tragbaren Gegenständen vom Chipkartentyp ist.

5. System nach einem der Ansprüche 1 bis 4, **dadurch gekennzeichnet, dass** das Bearbeitungssystem dazu vorgesehen ist, den Start einer Verzögerung von bestimmter Dauer bei der Erfassung der Verriegelung der ersten Lagervorrichtung und dem Lesen eines Etiketts des ersten Typs auszulösen,
wobei das Bearbeitungssystem das Anhalten der Verzögerung vor einem Verzögerungsende im Falle eines Lesens einer Benutzeridentifikation durchführt, das durch ein Modul zur Überprüfung einer Autorisierung einer Verriegelung validiert wird, wobei das Ende der Verzögerung die Steuerung einer Entriegelung der Lagervorrichtung (22) durch das Bearbeitungssystem auslöst.

6. System nach einem der Ansprüche 1 bis 5, **dadurch gekennzeichnet, dass** es eine Vorrichtung zur Videoüberwachung der Plätze umfasst, die mit dem Bearbeitungssystem in Verbindung steht.

7. System nach einem der Ansprüche 1 bis 6, **dadurch gekennzeichnet, dass** es einen Raum umfasst, der um die Lagervorrichtungen angeordnet ist und einen Park bildet, umfassend einen Zugang, dessen Öffnung durch das Lesen eines Benutzeridentifikators gesteuert wird.

8. System nach einem der Ansprüche 1 bis 7, **dadurch gekennzeichnet, dass** die Lagervorrichtung (22) ein Gehäuse umfasst, das mit einem Einsetz- und Führungsschlitz eines Befestigungselements (23) ausgestattet ist, umfassend eine Ausnehmung mit geschlossener Kontur, wobei der Schlitz gegenüber einem Haken (233) angeordnet ist, der drehbar in Bezug zum Gehäuse montiert ist, wobei der Haken dazu vorgesehen ist, sich in verriegelter Position beim Einsetzen eines Befestigungselements zu positionieren, wobei eine erste Feder den Haken in eine entriegelte Position bringt, in der sich ein vorspringender Teil (2331) des Hakens in eine Ausnehmung eines Befestigungselements einsetzt, wobei ein Element (234) zur Feststellung des Hakens in verriegelter Position von einer zweiten Feder zu dem Haken gedrückt wird, wobei das Feststellungselement von dem Haken durch mindestens eine Spindel (236), die eine kreisförmige Bahn beschreibt, entfernt wird, wobei sich die Spindel in eine Ausnehmung (2341) mit offener Kontur des Feststellungselements einsetzt, um das Feststellungselement mitzunehmen, wobei die Spindel von einem vom Bearbeitungssystem gesteuerten Motor angetrieben wird.

9. System nach einem der Ansprüche 1 bis 8, **dadurch gekennzeichnet, dass** der zu mietende Gegenstand ein Fahrrad ist, wobei die Lagervorrichtung (22) eine Vorrichtung (20) zum Halten eines Rades des Fahrrads umfasst, umfassend zwei zueinander parallele Platten, die mit einem Ständer oder einer Wand (3), die die Lagervorrichtung trägt, verbunden sind.

10. System nach Anspruch 9, **dadurch gekennzeichnet, dass** die bewegliche Befestigungsvorrichtung, die mit einem Fahrrad durch eine Verbindung, wie eine Wellkette verbunden ist, an einem beweglichen Gehäuse mit der beweglichen Befestigungsvorrichtung (23) befestigt ist, umfassend ein Schloss, das durch einen Schlüssel zur Verriegelung in einer Aufnahmelagerung eines Ansatzes zur Fixierung des Fahrrades außerhalb der Lagervorrichtungen betätigt wird, wobei das Schloss dazu vorgesehen ist, ein Herausziehen des Schlüssels nur dann zu ermöglichen, wenn der Diebstahlsicherungsansatz in seiner Lagerung ist, wobei der Diebstahlsicherungsansatz am Fahrrad oder an einem fixen Punkt, der einer Wand oder Stadtmobiliar angehört, befestigt ist.

11. System nach einem der Ansprüche 1 bis 10, **dadurch gekennzeichnet, dass** es einen Server (SER1) zur Verwaltung einer Datenbasis (BD1) umfasst, der die Speicherung von Benutzeridentifikatoren, die jeweils einem Identifikator des Platzes des gelagerten Gegenstandes zugeordnet sind, bei Mieten von Abstellplätzen durchführt,
oder der die Speicherung von Benutzeridentifikatoren, die jeweils einem Identifikator des gemieteten Gegenstandes zugeordnet sind, durchführt, wobei der Verwaltungsserver (SER1) mit dem Bearbeitungssystem durch eine Kommunikationsverbindung in Verbindung steht.

12. System nach Anspruch 11, **dadurch gekennzeichnet, dass** der Identifikator des Platzes des gelagerten Gegenstandes (1) einem Identifikator eines Verriegelungselements oder einer Referenz oder einer Adresse der Lagervorrichtung entspricht.

13. System nach Anspruch 11 oder 12, **dadurch gekennzeichnet, dass** die Kommunikationsverbindung mit dem Server (SER1) zur Verwaltung der Datenbasis über ein Kommunikationsnetzwerk (Res_RF) mit Funkfrequenzwellen hergestellt ist.

14. System nach einem der Ansprüche 11 bis 13, **dadurch gekennzeichnet, dass** die Lagervorrichtungen (22) über ein verkabeltes Versorgungs- und Kommunikationsnetzwerk mit einer Verwaltungsvorrichtung (225), umfassend das Bearbeitungssystem, verbunden sind, wobei die Verwaltungsvorrichtung (225) mit einem Stromverteilungsnetz verbunden ist,
wobei die Lagervorrichtungen auf Ständern montiert sind, wobei mindestens ein Rohr (224) mit einem dreieckigen oder rechteckigen Querschnitt, das am Boden (3) befestigt oder am Boden aufliegt, das verkabelte Netzwerk umgibt und schützt.

15. System nach Anspruch 14, **dadurch gekennzeichnet, dass** der Server mindestens umfasst:
- ein Modul (812) zur Kommunikation mit den Lagervorrichtungen oder mit der Vorrichtung zur Verwaltung einer Vielzahl von Lagervorrichtungen, oder
- ein Modul (806) zur Verwaltung von Abonnements, die von Benutzern unterzeichnet wurden, oder
- ein Modul (807) zur Verrechnung von Dienstleistungen an die Benutzer, oder
- ein Modul (808) zur Überwachung des Verwaltungsservers und der Datenbasen, oder
- ein Modul (809) zur Verwaltung einer computergestützten Wartung, oder
- eine Währungsplattform (810), die gesicherte Bankgeschäfte durchführt, oder
- einen Internet-Server (811) zur Verwaltung einer Internetseite.

16. System nach Anspruch 14 oder 15, **dadurch gekennzeichnet, dass** die Verwaltungsvorrichtung umfasst:
- ein Modul (705) zur Verwaltung einer Mensch-Maschine-Schnittstelle, umfassend mindestens eine Komponente zur Eingabe eines Identifizierungscodes des Benutzers für die Aktualisierung der gespeicherten Identifizierungsdaten, eine Anzeigekomponente und einen Leser von tragbaren elektronischen Gegenständen, jeweils umfassend Identifizierungsdaten des Benutzers für die Aktualisierung der gespeicherten Identifizierungsdaten, oder
- ein Modul (702) zur Verwaltung der Kommunikationen mit dem Verwaltungsserver über Funkwellen oder Kabelnetz, oder
- ein Währungsmodul (703) zur Verwaltung von Zahlungen durch die Benutzer, oder
- das Modul (704) zur Überprüfung einer Identifizierung für eine Authentifizierung der gespeicherten Daten zur Identifizierung des Benutzers oder des Fahrrads, oder
- das Steuermodul (701) für Kontrollen oder Steuerungen der Lagervorrichtungen, die durch ein lokales Netzwerk mit der Verwaltungsvorrichtung verbunden sind.

17. System nach Anspruch 16, **dadurch gekennzeichnet, dass** das Bearbeitungssystem dazu vorgesehen ist, die Lagervorrichtungen zu steuern, um die Befestigung nur der öffentlichen zur Miete stehenden Gegenstände zu gestatten, oder um die Befestigung nur der privaten zu lagernden Gegenstände zu gestatten, oder um die Befestigung der öffentlichen oder privaten Gegenstände unterschiedslos zu gestatten, wobei eine Entriegelung nach der Erfassung einer Verriegelung in Verbindung mit der Erfassung eines Typs eines nicht gestatteten Gegenstandes gesteuert wird.

18. System nach einem der Ansprüche 11 bis 15, **dadurch gekennzeichnet, dass** der Server eine Vielzahl von Datenbasen verwaltet, unter:
- einer Kundendatenbasis (801), umfassend mindestens Identifizierungsdaten von Benutzern,
- einer Datenbasis (802) zur Verwaltung von Abstellparks, umfassend mindestens Daten, die für eine Anzahl von funktionellen Lagervorrichtungen und eine Anzahl von mit Fahrzeugen belegten Fahrrädern für jeden Park repräsentativ sind,
- eine Wartungsdatenbasis (803), umfassend mindestens Daten, die für durchzuführende Wartungsvorgänge repräsentativ sind,
- eine Archivierungsdatenbasis (804), umfassend mindestens Daten, die für vorher durchgeführte Vorgänge betreffend Verriegelungen oder Entriegelungen von Lagervorrichtungen repräsentativ sind.

19. Verfahren zum Lagern und Auslagern von Gegenständen für die Miete von Plätzen oder für die Miete von gelagerten Gegenständen, umfassend eine Lagervorrichtung (22), umfassend einen Aktuator zur Verriegelung oder Entriegelung, einen Leser von tragbaren Gegenständen, der mit einem Bearbeitungssystem, das den Aktuator zur Verriegelung oder Entriegelung steuert, kommuniziert, ein Steuermodul und einen kontaktlosen Leser (232), der mit dem Bearbeitungssystem, das den Aktuator zur Verriegelung oder Entriegelung steuert, kommuniziert, wobei das Verfahren mindestens umfasst:
- einen Schritt des Lesens von Daten, die für einen Typ eines Identifizierungscodes eines Benutzers oder Rechte des Benutzers repräsentativ sind, durch den Leser von tragbaren Gegenständen in einem kommunizierenden tragbaren Gegenstand,
**dadurch gekennzeichnet, dass** es ferner umfasst:
- einen Schritt des Lesens von Daten, die für einen ersten Typ eines Identifizierungscodes in einem mit einem zu mietenden Gegenstand verbundenen Etikett und einen zweiten Typ eines Identifizierungscodes in einem mit einem Verriegelungselement eines zu mietenden Platzes verbundenen Etikett repräsentativ sind, durch den kontaktlosen Leser (232),
- einen Schritt der Bestimmung des Identifizierungscodetyps in dem von dem Steuermodul gelesenen Etikett nach einem Test der Struktur der Identifizierungsdaten,
- einen Schritt der Autorisierung der Verriegelung nach dem bestimmten Identifikatortyp.

20. Verfahren nach Anspruch 19, **dadurch gekennzeichnet, dass** das Lesen der für den Identifizierungscode eines Benutzers repräsentativen Daten und das Lesen der für einen Identifizierungscode des mit dem Verriegelungselement des zu mietenden Platzes verbundenen Etiketts unterschiedliche Bearbeitungsvorgänge auslösen.

21. Verfahren nach Anspruch 19 oder 20, **dadurch gekennzeichnet, dass**, wobei eine Vielzahl von Lagervorrichtungen (22) von dem Bearbeitungssystem gesteuert wird, wobei jede Lagervorrichtung einen zu mietenden Gegenstand (1) fixieren kann, wobei jede Lagervorrichtung (22) einen Verriegelungssensor umfasst, der von dem Bearbeitungssystem kontrolliert wird, das die Verriegelung oder Entriegelung der Lagervorrichtungen steuert, das Verfahren einen Schritt (Etp06, Etp20) der Verriegelung der ersten der Lagervorrichtungen durch den Benutzer umfasst, wodurch es zur Erfassung der Verriegelung der ersten Lagervorrichtung kommt.

22. Verfahren nach Anspruch 21, **dadurch gekennzeichnet, dass** folgen:
- ein Schritt der Erfassung eines Funkfrequenzetiketts, das einem Identifikator eines zur Miete stehenden Gegenstandes entspricht,
- ein Schritt der Aktualisierung eines Speicherraums, auf den das Bearbeitungssystem Zugriff hat, zur Speicherung von Paaren, die von einem Identifikator des Benutzers und einem Identifikator des gelagerten Gegenstandes gebildet sind, wobei das Paar, das dem gelesenen Identifikator eines Gegenstandes entspricht, gelöscht wird.

23. Verfahren nach Anspruch 22, **dadurch gekennzeichnet, dass** folgen:
- ein Schritt der Erfassung eines Funkfrequenzetiketts, das einem Identifikator eines zur Miete stehenden Platzes entspricht,
- ein Schritt des Lesens eines tragbaren Gegenstandes entsprechend einem Identifikator des Benutzers,
- ein Schritt der Validierung-Überprüfung des gültigen oder nicht gültigen Zustands des Identifikators des Benutzers,
- ein Schritt der Speicherung des Paars, das von dem gültigen Benutzeridentifikator und dem Identifikator eines Platzes in dem Speicherraum gebildet ist.

24. Verfahren nach Anspruch 23, **dadurch gekennzeichnet, dass** im Falle eines Fehlschlagens eines Lesens des Benutzeridentifikators oder im Falle eines Fehlschlagens einer Validierung des ungültigen Benutzeridentifikators die Lagervorrichtung nun entriegelt gesteuert wird.

25. Verfahren nach Anspruch 23 oder 24, **dadurch gekennzeichnet, dass** auf den Schritt der Erfassung des Funkfrequenzetiketts, das dem Identifikator eines zur Miete stehenden Platzes entspricht, ein Schritt des Startens einer Verzögerung von bestimmter Dauer folgt,
wobei die Verzögerung vor einem Verzögerungsende im Falle eines validierten Benutzeridentifikators entsprechend der Beibehaltung der Verriegelung angehalten wird oder
wobei das Verzögerungsende der Invalidierung einer Validierung des Benutzeridentifikators entspricht, worauf die Entriegelung folgt.

26. Verfahren nach einem der Ansprüche 23 bis 25, **dadurch gekennzeichnet, dass** die Lagervorrichtung (22) eine Raste zur Verriegelung eines Befestigungselements (23) umfasst, das Bearbeitungssystem die Raste zumindest in verriegelte Position steuert, und die Raste dazu vorgesehen ist, sich in Verriegelungsposition beim Einsetzen des Befestigungselements in die Raste zu positionieren, das Funkfrequenzetikett (231) in das Befestigungselement (23) oder in den zu lagernden Gegenstand (1) eingelassen ist, der Funkfrequenzetikettenleser gegenüber dem eingelassenen Funkfrequenzetikett in einer in einer fixierten Position des zu lagernden Gegenstandes angeordnet ist.

27. Verfahren nach Anspruch 26, **dadurch gekennzeichnet, dass** das Bearbeitungssystem mit einem Verwaltungsserver (SER1) einer Datenbasis (BD1) kommuniziert,
wobei der Schritt der Überprüfung des Zustands des Identifikators des Benutzers umfasst:
- einen Schritt (Etp42) der Übertragung an den Verwaltungsserver der Datenbasis mindestens des Identifikators des Benutzers, der dem Identifikator eines Platzes zugeordnet ist, entsprechend dem gelesenen Identifikator des Befestigungselements, das in der Lagervorrichtung in verriegelter Position fixiert ist, oder einer Referenz oder einer Adresse der von dem Bearbeitungssystem gespeicherten Lagervorrichtung,
- einen Schritt des Wartens auf die Antwort des Verwaltungsservers der Datenbasis, wobei der Server eine Suche in der Datenbasis nach Daten durchführt, die dem Benutzeridentifikator zugeordnet und für eine Autorisierung einer Verriegelung repräsentativ sind,
- einen Schritt des Empfangs von vom Verwaltungsserver übertragenen Daten, die für die validierte Autorisierung einer Verriegelung entsprechend dem gültigen Zustand des Benutzeridentifikators repräsentativ sind.

28. Verfahren nach einem der Ansprüche 23 bis 27, **dadurch gekennzeichnet, dass** ihm bei einer Miete eines zu lagernden Gegenstandes vorausgehen:
- ein Schritt (Etp01) der Reservierung des zu lagernden Gegenstandes oder der Unterzeichnung an einer Teilnahme an einem Dients zum Mieten von zu lagernden Gegenständen oder zum Bezahlen einer Miete des zu lagernden Gegenstandes durch den Benutzer bei einer Zahlungs-, Abonnement- oder Reservierungsstation,
- ein Schritt (Etp02) der Lieferung eines dem Benutzer eigenen Identifikators an den Benutzer nach der Reservierung oder Unterzeichnung des Abonnements oder der durch die Station validierten Bezahlung,
- ein Schritt (Etp03) der Anforderung einer Entriegelung des Fahrrades durch den Benutzer, wobei diese Anforderung bei der Lagervorrichtung oder bei einer Verwaltungsvorrichtung, umfassend das Bearbeitungssystem, nachgekommen wird,
- ein Schritt (Etp04) der Identifizierung des Benutzers durch das Bearbeitungssystem, umfassend die Speicherung des Paars, umfassend den Benutzeridentifikator, der dem Identifikator des gemieteten Gegenstandes zugeordnet ist,
- ein Schritt (Etp05) der Steuerung einer Entriegelung der Lagervorrichtung durch das Bearbeitungssystem, die es dem Benutzer ermöglicht, den gelagerten Gegenstand zu entnehmen.

29. Verfahren nach einem der Ansprüche 23 bis 27, **dadurch gekennzeichnet, dass** ihm bei einer Miete eines Abstellplatzes vorausgehen:
- ein Schritt (Etp01) der Reservierung des Abstellplatzes des zu lagernden Gegenstandes oder der Unterzeichnung an einer Teilnahme an einem Dients zum Mieten von zu lagernden Gegenständen oder zum Bezahlen einer Miete eines Abstellplatzes des zu lagernden Gegenstandes durch den Benutzer bei einer Zahlungs-, Abonnement- oder Reservierungsstation,
- ein Schritt (Etp02) der Lieferung eines dem Benutzer eigenen Identifikators an den Benutzer nach der Reservierung oder Unterzeichnung des Abonnements oder der durch die Station validierten Bezahlung,
und dass darauf folgen:
- ein Schritt (Etp24) der Anforderung einer Entriegelung des gelagerten Gegenstandes durch den Benutzer, wobei diese Anforderung bei der Lagervorrichtung oder bei einer Verwaltungsvorrichtung, umfassend das Bearbeitungssystem, nachgekommen wird,
- ein Schritt (Etp25) der Identifizierung des Benutzers bei der Lagervorrichtung oder bei der Verwaltungsvorrichtung, in Bezug auf den vorher gespeicherten Benutzeridentifikator,
- ein Schritt (Etp26) der Steuerung der Entriegelung der Lagervorrichtung durch das Bearbeitungssystem, die es dem Benutzer ermöglicht, den gelagerten Gegenstand zu entnehmen,
- ein Schritt (Etp27), des Löschens des von dem Benutzeridentifikator und dem Identifikator des gemieteten Platzes gebildeten Paars im Speicher.

## Claims

1. System for storing objects and taking them out of storage, for the hire of parking spaces or for the hire of stored objects, comprising a storage device (22), comprising:
- a locking or unlocking actuator,
- a reader of portable objects communicating with a processing system controlling the locking or unlocking actuator,
the reader of portable objects being capable of reading a type of identifier code of a user or user rights in a portable object,
the system for storing objects and taking them out of storage being **characterised in that** the storage device further comprises a contactless reader (232) communicating with the processing system controlling the locking or unlocking actuator,
the contactless reader being capable of reading:
- a first type of identifier code in a second type of label connected to an object to be hired, or
- a second type of identifier code in a first type of label connected to a locking member for a parking space to be hired,
and **in that** the processing system controlling the locking or unlocking actuator comprises a control module,
the control module being capable of differentiating the first type of identifier code in a read label connected to an object to be hired, from the second type of identifier code in a read label connected to a locking member for a parking space to be hired,
the locking of parking spaces or storage devices being authorised by the control module according to the type of identifier recognised,
and the system comprises a plurality of storage devices (22) which can each block an object to be stored, the processing system performing control of locking or unlocking of the actuators of the storage devices, at least a first one of the storage devices being associated with a locking member (21) allowing the hire of a parking space corresponding to the first storage device,
the locking member being connected to a base (241) which is fixed relative to the associated first storage device,
the locking member being connected to a first fastening member (23) adapted to be fastened to the storage device and comprising a radiofrequency label of the first given type,
each storage device comprising a sensor (228, 229) for the locked or unlocked state of the storage device, communicating with the processing system,
the processing system being designed so as to store a pair composed of a user identifier and an identifier corresponding to the parking space for the first storage device, upon the detection of locking of the first storage device and reading of the first type of label, an unlocking command being subsequently sent to the first storage device only if a new reading of user identifier corresponding to this stored user identifier is carried out, the processing system being designed so as to store a pair composed of a user identifier and an identifier belonging to a stored object available for hire, upon detection of unlocking of one of the storage devices comprising the stored object available for hire, and the locking member is a first link such as a ringed chain or a cable (21), the objects to be stored available for hire being each connected to a second movable fastening member (23) adapted to be fastened to the storage device (22) and comprising the radiofrequency label (231) of the second type belonging to each object available for hire by a second link such as a chain or cable (21) connecting an object available for hire to its fastening member.

2. System according to claim 1, **characterised in that** a user identifier, read by the reader of portable objects, and an identifier of a locking member for a parking space to be hired, read by the reader (232), each activate a different processing program executed by the processing system.

3. System according to claim 1 or 2, **characterised in that** the contactless reader is of the radiofrequency label reader type (232), the labels being connected to an object to be hired or to a locking member for a parking space to be hired.

4. System according to claim 1 or 2, **characterised in that** the portable object reader is of the type of a reader of portable objects of the radiofrequency card type.

5. System according to one of claims 1 to 4, **characterised in that** the processing system is designed so as to activate the start of a delay time of given duration upon detection of locking of the first storage device and reading of a label of the first type,
the processing system stopping the delay time before the end of the delay time, in case of reading a user identification validated by a module for verifying the authorisation of locking, the end of the delay time activating the command for unlocking of the storage device (22), by the processing system.

6. System according to one of claims 1 to 5, **characterised in that** it comprises a device for video monitoring of the parking spaces in communication with the processing system.

7. System according to one of claims 1 to 6, **characterised in that** it comprises an enclosure disposed around the storage devices forming a parking area comprising an entry gate of which the opening is controlled by reading a user identifier.

8. System according to one of claims 1 to 7, **characterised in that** the storage device (22) comprises a housing equipped with a slot for insertion and guiding of a fastening member (23) comprising a recess of closed contour, the slot being disposed opposite a hook (233) mounted so as to be rotatable relative to the housing, the hook being designed so as to position itself in the locked position during insertion of a fastening member, a first spring biasing the hook towards an unlocked position in which a projecting portion (2331) of the hook is inserted in a fastening member recess, a member (234) for blocking the hook in the locked position being biased by a second spring towards the hook, the blocking member being removed from the hook by at least one pin (236) describing a circular trajectory, the pin being inserted in an open-contoured recess (2341) of the blocking member for driving the blocking member, the pin being driven by a motor driven by the processing system.

9. System according to one of claims 1 to 8, **characterised in that** the object to be hired is a bicycle, the storage device (22) comprising a bicycle wheel holding device (20), comprising two plates parallel to each other and connected to a post or to a wall (3) supporting the storage device.

10. System according to claim 9, **characterised in that** the movable fastening device connected to a bicycle by a link, such as a ringed chain, is fixed to a housing movable with the movable fastening device (23), the housing comprising a lock actuated by a key for locking in a recess for receiving a connector for immobilisation of the bicycle outside the storage devices, the lock being designed to allow removal of the key only when the antitheft connector is locked in its recess, the antitheft connector being fixed to the bicycle or to a fixed point belonging to a wall or street furniture.

11. System according to one of claims 1 to 10, **characterised in that** it comprises a server (SER1) for the management of a database (BD1) which performs the storage of user identifiers each associated with an identifier of the parking space of the stored object, upon hire of parking spaces, or which performs the storage of user identifiers each associated with an identifier of the hired object, the management server (SER1) being in communication with the processing system by a communication link.

12. System according to claim 11, **characterised in that** the identifier of the parking space for the stored object (1) corresponds to a locking member identifier or a reference or an address of the storage device.

13. System according to claim 11 or 12, **characterised in that** the link for communication with the server (SER1) for management of the database is provided by a radiofrequency wave communication network (Res RF).

14. System according to one of claims 11 to 13, **characterised in that** the storage devices (22) are connected, by a cable supply and communication network, to a management device (225) comprising the processing system, the management device (225) being connected to an electricity distribution network,
the storage devices being mounted on posts, at least one tube (224) of triangular or rectangular section which is fixed to the ground (3) or flush with the ground surrounding and protecting the cable network.

15. System according to claim 14, **characterised in that** the server comprises at least:
- a module (812) for communication with the storage devices or with the device for managing a plurality of storage devices, or
- a module (806) for managing subscriptions taken out by users, or
- a module (807) for invoicing users for services, or
- a module (808) for supervision of the management server and databases, or
- a module (809) for computer-aided maintenance management, or
- a monetisation platform (810) performing secure banking operations, or
- a web server (811) for the management of a website.

16. System according to claim 14 or 15, **characterised in that** the management device comprises:
- a man-machine interface management module (705) comprising at least one entry component of a user identification code for updating the stored identification data, a display component and a reader of portable electronic objects each comprising user identification data for updating the stored identification data, or
- a module (702) for managing the communications with the management server by Hertzian waves or by cable network or
- a monetisation module (703) for the management of payments by users, or
- the module (704) for verification of identification for authentication of the stored identification data of the user or bicycle, or
- the control module (701) for control and command of the storage devices connected by a local network, to the management device.

17. System according to claim 16, **characterised in that** the processing system is designed so as to control the storage devices in order to authorise fastening only of public objects available for hire or in order to authorise fastening only of private objects to be stored or in order to authorise fastening of both public and private objects, unlocking being controlled further to the detection of locking associated with the detection of an unauthorised type of object.

18. System according to one of claims 11 to 15, **characterised in that** the server manages a plurality of databases among:
- a client database (801) comprising at least user identification data,
- a database (802) for the management of parking areas comprising at least data representing a number of functional storage devices and a number of storage devices occupied by bicycles for each parking area,
- a maintenance database (803) comprising at least data representing maintenance operations to be performed,
- an archive database (804) comprising at least data representing previously performed operations concerning locking or unlocking of storage devices.

19. Method for storing objects and taking them out of storage, for the hire of parking spaces or for the hire of stored objects, comprising a storage device (22) comprising a locking or unlocking actuator, a reader of portable objects communicating with a processing system controlling the locking or unlocking actuator, a control module and a contactless reader (232) communicating with the processing system controlling the locking or unlocking actuator, the method comprising at least:
- a step of reading, by the reader of portable objects, of data representing a type of identification code of a user or user rights, in a communicating portable object,
**characterised in that** it further comprises:
- a step of reading, by the contactless reader (232), of data representing a first type of identification code in a label connected to an object to be hired, or a second type of identification code in a label connected to a locking member for a parking space to be hired,
- a step of determining the type of identification code in the label read by the control module after a test of the structure of identification data,
- a step of authorising locking according to the type of identification determined.

20. Method according to claim 19, **characterised in that** reading of the data representing a user identification code and reading of the data representing the identification code of the label connected to the locking member of the parking space to be hired activate different processing operations.

21. Method according to claim 19 or 20, **characterised in that**, a plurality of storage devices (22) being controlled by the processing system, each storage device being able to block an object (1) to be stored, each storage device (22) comprising a locking sensor controlled by the processing system controlling locking or unlocking of the storage devices, the method comprises a step (Etp06, Etp20) of locking of the first of the storage devices by the user, causing the detection of locking of the first storage device.

22. Method according to claim 21, **characterised in that** it is followed by:
- a step of detection of a radiofrequency label corresponding to an identifier of an object available for hire,
- a step of updating a memory space, accessed by the processing system, for storing pairs composed of a user identifier and a stored object identifier where the pair corresponding to the read object identifier is deleted.

23. Method according to claim 22, **characterised in that** it is followed by:
- a step of detection of a radiofrequency label corresponding to an identifier of a parking space available for hire,
- a step of reading a portable object corresponding to a user identifier,
- a step of validation of verification of whether or not the user identifier is valid,
- a step of storage of the pair composed of the valid user identifier and the parking space identifier in the memory space.

24. Method according to claim 23, **characterised in that**, in case of failure of reading of the user identifier or in case of failure of validation of the invalid user identifier, the storage device is then controlled unlocked.

25. Method according to claim 23 or 24, **characterised in that** the step of detection of the radiofrequency label corresponding to the identifier of a parking space available for hire, is followed by a step of starting a delay time of given duration,
the delay time being stopped before an end of delay time in case of a validated user identifier corresponding to maintenance of locking or
the end of the delay time corresponding to invalidation of user identifier validation and being followed by unlocking.

26. Method according to one of claims 23 to 25, **characterised in that** the storage device (22) comprises a latch for locking a fastening member (23), the processing system controlling the latch at least in the locked position and the latch being designed so as to position itself in the locking position upon insertion of the fastening member in the latch, the radiofrequency label (231) being embedded in the fastening member (23) or in the object (1) to be stored, the radiofrequency label reader being disposed opposite the embedded radiofrequency label, in a blocked position of the object to be stored.

27. Method according to claim 26, **characterised in that**, the processing system communicating with a server (SER1) for the management of a database (BD1),
the step of verification of the user identifier state comprises:
- a step (Etp42) of transmission, to the database management server, of at least the user identifier associated with the parking space identifier corresponding to the read identifier of the fastening member blocked in the storage device in the locked position or to a reference or a storage device address stored by the processing system,
- a step of waiting for the reply of the database management server, the server carrying out a search, in the database, for data associated with the user identifier and representing authorisation of locking,
- a step of reception of data transmitted by the management server, representing validated authorisation of locking corresponding to the valid state of the user identifier.

28. Method according to one of claims 23 to 27, **characterised in that**, upon hire of the object to be stored, it is preceded by:
- a step (Etp01) of reservation of the object to be stored or taking out a subscription to a service for hire of objects to be stored or payment for hire of the object to be stored, by the user, at a payment, subscription or reservation station,
- a step (Etp02) of providing the user with an identifier peculiar to the user, after reservation or taking out the subscription or payment validated by the station,
- a step (Etp03) of requesting, by the user, unlocking of the bicycle, this request being made to the storage device or to a management device comprising the processing system,
- a step (Etp04) of identification of the user by the processing system comprising storage of the pair comprising the user identifier associated with the hired object identifier,
- a step (Etp05) of control, by the processing system, of unlocking of the storage device, allowing the user to remove the stored object.

29. Method according to one of claims 23 to 27, **characterised in that**, upon hire of a parking space, it is preceded by:
- a step (Etp01) of reservation of a parking space for an object to be stored or taking out a subscription to a service for the hire of parking spaces for objects to be stored or payment for hire of a parking space for the object to be stored, by the user at a payment, subscription or reservation station,
- a step (Etp02) of providing the user with an identifier peculiar to the user, after reservation or taking out the subscription or payment validated by the station, and **in that** it is followed by:
- a step (Etp24) of requesting, by the user, unlocking of the stored object, this request being made to the storage device or to a management device comprising the processing system,
- a step (Etp25) of identification of the user to the storage device or to the management device, in line with the previously stored user identifier,
- a step (Etp26) of control, by the processing system, of unlocking of the storage device allowing the user to remove the stored object,
- a step (Etp27) of deletion from the memory of the pair composed of the user identifier and the hired parking space identifier.
